# EUROPÄISCHE PATENTSCHRIFT

(11) **EP 2 370 794 B1**
(45) Veröffentlichungstag und Bekanntmachung des Hinweises auf die Patenterteilung: **01.05.2019**
(21) Anmeldenummer: 09774893.3
(22) Anmeldetag: 11.12.2009
(51) Int. Cl.: G01F 1/66

(54) **MESSROHR EINES MESSSYSTEMS ZUR BESTIMMUNG UND/ODER ÜBERWACHUNG DES DURCHFLUSSES EINES MESSMEDIUMS DURCH DAS MESSROHR MITTELS ULTRASCHALL**
MEASURING TUBE OF A MEASURING SYSTEM FOR DETERMINING AND/OR MONITORING THE FLOW OF A MEASURING MEDIUM THROUGH SAID MEASURING TUBE BY MEANS OF ULTRASOUND
TUBE DE MESURE D'UN SYSTÈME DE MESURE POUR DÉTERMINER ET/OU SURVEILLER LE DÉBIT D'UN FLUIDE À MESURER À TRAVERS LE TUBE DE MESURE À L'AIDE D'ULTRASONS

(30) Priorität: 29.12.2008 DE 102008055165
(43) Veröffentlichungstag der Anmeldung: 05.10.2011
(73) Patentinhaber: Endress+Hauser Flowtec AG, 4153 Reinach (CH)
(72) Erfinder: BEZDEK, Michal, CH-4173 Dornach (CH); KUMAR, Vivek, CH-4132 Muttenz (CH); WIEST, Achim, 79576 Weil am Rhein (DE); UEBERSCHLAg, Pierre, F-68300 Saint-Louis (FR)
(74) Vertreter: Andres, Angelika Maria
(86) Internationale Anmeldenummer: PCT/EP2009/066913
(87) Internationale Veröffentlichungsnummer: WO 2010/076152

(56) Entgegenhaltungen:
- EP-B1- 0 804 717
- JP-A- 11 281 432
- US-A- 5 179 862
- US-A- 5 717 145

## Beschreibung

Die vorliegende Erfindung betrifft ein Messrohr, ein Messsystem und ein Verfahren zur Bestimmung und/oder Überwachung des Durchflusses eines Messmediums durch das Messrohr mittels Ultraschall, wobei das Messrohr einen Messrohreinlauf und einen Messrohrauslauf aufweist, welcher Messrohreinlauf eine Messrohreinlaufachse aufweist, welche Messrohreinlaufachse einen Winkel α ungleich 90° zur Messrohrachse aufweist und welcher Messrohrauslauf eine Messrohrauslaufachse aufweist, welche Messrohrauslaufachse einen Winkel β ungleich 90° zur Messrohrachse aufweist, und wobei das Messsystem mindestens zwei elektromechanische Wandlerelemente aufweist, welche sich im Wesentlichen planparallel gegenüberstehen und jeweils mit dem Messrohr akustisch koppelbar sind.

Ultraschall-Durchflussmessgeräte werden vielfach in der Prozess- und Automatisierungstechnik eingesetzt. Sie erlauben in einfacher Weise, den Volumendurchfluss und/oder Massendurchfluss in einer Rohrleitung zu bestimmen.

Die bekannten Ultraschall-Durchflussmessgeräte arbeiten häufig nach dem Doppler- oder nach dem Laufzeitdifferenz-Prinzip.

Beim Laufzeitdifferenz-Prinzip werden die unterschiedlichen Laufzeiten von Ultraschallimpulsen relativ zur Strömungsrichtung der Flüssigkeit ausgewertet.

Hierzu werden Ultraschallimpulse in einem bestimmten Winkel zur Rohrachse sowohl mit als auch entgegen der Strömung gesendet. Aus der Laufzeitdifferenz lässt sich die Fließgeschwindigkeit und damit bei bekanntem Durchmesser des Rohrleitungsabschnitts der Volumendurchfluss bestimmen.

Beim Doppler-Prinzip werden Ultraschallwellen mit einer bestimmten Frequenz in die Flüssigkeit eingekoppelt und die von der Flüssigkeit reflektierten Ultraschallwellen ausgewertet. Aus der Frequenzverschiebung zwischen den eingekoppelten und reflektierten Wellen lässt sich ebenfalls die Fließgeschwindigkeit der Flüssigkeit bestimmen.

Reflexionen in der Flüssigkeit treten jedoch nur auf, wenn Luftbläschen oder Verunreinigungen in dieser vorhanden sind, so dass dieses Prinzip hauptsächlich bei verunreinigten Flüssigkeiten Verwendung findet.

Die Ultraschallwellen werden mit Hilfe so genannter Ultraschallwandler erzeugt bzw. empfangen. Hierfür sind Ultraschallwandler an der Rohrwandung des betreffenden Rohrleitungsabschnitts fest angebracht. Seit neuerem sind auch Clamp-on-Ultraschall-Durchflussmesssysteme erhältlich. Bei diesen Systemen werden die Ultraschallwandler nur noch mit einem Spannverschluss an die Rohrwandung gepresst. Derartige Systeme sind z. B. aus der EP 686 255 B1, US-A 44 84 478 oder US-A 45 98 593 bekannt.

Ein weiteres Ultraschall-Durchflussmessgerät, das nach dem Laufzeitdifferenz-Prinzip arbeitet, ist aus der US-A 50 52 230 bekannt. Die Laufzeit wird hier mittels kurzen Ultraschallimpulsen ermittelt.

Ein großer Vorteil von Clamp-On-Ultraschall-Durchflussmesssystemen ist, dass sie das Messmedium nicht berühren und auf eine bereits bestehende Rohrleitung angebracht werden.

Die Ultraschallwandler bestehen normalerweise aus einem piezoelektrischen Element, auch kurz Piezo genannt, und einer Koppelschicht, auch Koppelkeil oder seltener Vorlaufkörper genannt. Die Koppelschicht ist dabei meist aus Kunststoff gefertigt, das piezoelektrische Element besteht in der industriellen Prozessmesstechnik üblicherweise aus einer Piezokeramik. Im piezoelektrischen Element werden die Ultraschallwellen erzeugt und über die Koppelschicht zur Rohrwandung geführt und von dort in die Flüssigkeit geleitet. Da die Schallgeschwindigkeiten in Flüssigkeiten und Kunststoffen unterschiedlich sind, werden die Ultraschallwellen beim Übergang von einem zum anderen Medium gebrochen. Der Brechungswinkel bestimmt sich in erster Näherung nach dem Snell'schen Gesetz. Der Brechungswinkel ist somit abhängig von dem Verhältnis der Ausbreitungsgeschwindigkeiten in den Medien.

Zwischen dem piezoelektrischen Element und der Koppelschicht kann eine weitere Koppelschicht angeordnet sein, eine so genannte Anpassungsschicht. Die Anpassungsschicht übernimmt dabei die Funktion der Transmission des Ultraschallsignals und gleichzeitig die Reduktion einer durch unterschiedliche akustische Impedanzen verursachte Reflektion an Grenzschichten zwischen zwei Materialen.

In der US 5,179,862 wird ein Ultraschallmesssystem gemäß dem Oberbegriff des unabhängigen Anspruchs offenbart, wobei in eine feste Vorrichtung ein flexibles Messrohr, ein Schlauch, einziehbar ist. Der feste Teil des Messsystems beherbergt die Ultraschallwandler. Verläuft ein Ultraschallsignal axial durch das Messrohr, wird das Messrohr an zwei sich gegenüberliegenden Stellen gebogen. Zwischen den Biegungen befindet sich also die eigentliche Messstrecke des Messrohrs, die Biegungen könnten als Messrohreinlauf und Messrohrauslauf mit gleichem Durchmesser wie das Messrohr aufgefasst werden. Die Koppelelemente der Ultraschallwandler koppeln an den Biegungen die Ultraschallsignale in das Messrohr ein bzw. aus dem Messrohr aus. Dazu weisen die Koppelelemente entsprechende Ein- und/oder Auskoppelflächen auf, welche jeweils einen Winkel zu den piezoelektrischen Elementen aufweisen, welche ihrerseits planparallel zueinander und senkrecht auf der Messrohrachse angeordnet sind. Die schallaussendenden bzw. schallempfangenden Flächen der piezoelektrischen Elemente betragen mindestens die Größe des Durchmessers des Messrohrs. Nachteilig an Winkeln zwischen den schallaussendenden bzw. schallempfangenden Flächen der piezoelektrischen Elemente und den Ein- bzw. Auskoppelflächen der Koppelelemente ist, dass die Schallgeschwindigkeiten in den Koppelelementen und dem Messrohr und/oder im Messmedium aufeinander und mit den Winkeln abgestimmt sein müssen, um einen zur Messrohrsachse parallelen Signalpfad des Ultraschallsignals zu erhalten.

Weitere Beispiele von Ultraschall-Durchflussmesssystemen mit axial an den Enden eines Messrohrs anbringbaren Ultraschallwandlern zeigen die US 5,463,906 und die US 5,717,145. Auch werden piezoelektrische Elemente eingesetzt mit schallaussendenden bzw. schallempfangenden Flächen, welche mindestens der Größe des Durchmessers des Messrohrs entsprechen, um den gesamten Messrohrquerschnitt messtechnisch zu erfassen.

Auch die EP 1 760 436 A2 zeigt ein Ultraschall-Durchflussmesssystem mit einem Messrohr, welches axial mittels Ultraschall durchschallt wird, mit piezoelektrischen Elementen, welche einen Durchmesser der schallaussendenden bzw. schallempfangenden Flächen aufweisen, der mindestens gleich groß dem Durchmesser des Messrohrs ist.

Hingegen ist in der US 2007/0227263 A1 ein Ultraschall-Durchflussmesssystem mit einem Messrohr beschrieben, welches vier Öffnungen aufweist. Zwei Öffnungen sind vorgesehen zum Anschluss an den Prozess. Diese Öffnungen bilden jeweils einen Messrohreinlauf, respektive einen Messrohrauslauf, welche senkrecht auf der Messrohrachse stehen. Sowohl der Messrohreinlauf, als auch der Messrohrauslauf sind auf der gleichen Seite des Messrohrs angebracht. In die beiden anderen Öffnungen des Messrohrs werden die Ultraschallwandler eingefügt. Die Koppelelemente der Ultraschallwandler verschließen das Messrohr axial. Die Ultraschallwandler stehen sich im Wesentlichen planparallel und in einem Winkel von 90° zur Messrohrachse gegenüber. Die Ein- und/oder Auskoppelflächen der Koppelelemente der Ultraschallwandler, zur Ein- bzw. Auskopplung der Ultraschallsignale in das Messmedium, sind konvex. unmittelbar vor den Ein- und/oder Auskoppelflächen, also im Bereich der Ein- bzw. Auskopplung der Ultraschallsignale in das bzw. aus dem Messmedium, weist das Messrohr einen vergrößerten Querschnitt auf. Die Durchmesser der im Wesentlichen scheibenförmigen Ultraschallwandler sind größer als der Durchmesser einer wesentlichen Messstrecke des Messrohrs. Durch die Querschnittsänderung des Messrohrs vor den Ein- und/oder Auskoppelflächen entstehen eben vor den Ein- und/oder Auskoppelflächen Kammern, wo sich das Messmedium sammeln kann. Da die Durchmesser der Messrohrein- bzw. Messrohrausläufe und der Messstrecke des Messrohrs selbst im Wesentlichen gleich sind, wird die Strömung des Messmediums vor den Ein- und/oder Auskoppelflächen verlangsamt und im Messrohr, in einem wesentlichen Teil der Messstrecke, beschleunigt.

Auch die WO 2008/101662 A2 verfügt über einen ähnlichen Aufbau der Messzelle. Zwar sind hier die Durchmesser der Messrohrein- bzw. Messrohrausläufe und des Messrohrs selbst im Wesentlichen gleich und die Messrohrein- bzw. Messrohrausläufe stehen in einem Winkel kleiner 90° auf der Messrohrachse, jedoch wird auch hier die Strömung des Messmediums vor den Ein- und/oder Auskoppelflächen, welche auch hier wiederum durch die in die Messzelle eingesetzten Koppelelemente der Ultraschallwandler geformt werden und in einem Winkel von 90° zur Messrohrachse angeordnet sind, verlangsamt. Hier werden ebenfalls Kammern vor den Ein- und Auskoppelflächen gebildet. Die schallaussendenden bzw. schallempfangenden Flächen der piezoelektrischen Elemente sind größer als der Durchmesser des Messrohrs, allerdings verschließt die Schallein- bzw. Schallauskoppelfläche des Koppelelements axial das Messrohr und ist daher von gleicher Größe.

Der Erfindung liegt die Aufgabe zugrunde, ein hochgenaues Messsystem mit kostengünstig auswechselbaren Messrohren/Messzellen bereit zu stellen.

Die Aufgabe wird gelöst durch ein Messrohr für den Einsatz in einem Messsystem zur Bestimmung und/oder Überwachung des Durchflusses eines Messmediums durch das Messrohr, mit einer Messrohrachse und mit einer ersten Ultraschallwandleraufnahme zur Aufnahme zumindest eines ersten elektromechanischen Wandlerelements und zumindest einer weiteren, zweiten Ultraschallwandleraufnahme zur Aufnahme zumindest eines zweiten elektromechanischen Wandlerelements, und mit einem Messrohreinlauf und einem Messrohrauslauf, welcher Messrohreinlauf eine Messrohreinlaufachse aufweist, welche Messrohreinlaufachse einen Winkel α ungleich 90° zur Messrohrachse aufweist und welcher Messrohrauslauf eine Messrohrauslaufachse aufweist, welche Messrohrauslaufachse einen Winkel β ungleich 90° zur Messrohrachse aufweist, wobei die erste Ultraschallwandleraufnahme ein erstes Koppelement zwischen erstem elektromechanischen Wandlerelement und dem Messmedium ist und eine, einen Mittelpunkt aufweisende, erste Schallein- und/oder Schallauskoppelfläche aufweist, wobei die zweite Ultraschallwandleraufnahme ein zweites Koppelement zwischen zweitem elektromechanischen Wandlerelement und Messmedium ist und eine, einen Mittelpunkt aufweisende, zweite Schallein- und/oder Schallauskoppelfläche aufweist, wobei die Ultraschallwandleraufnahmen so ausgestaltet sind, dass eine Verbindungslinie zwischen den Mittelpunkten der ersten und zweiten Schallein- und/oder Schallauskoppelfläche in einem Winkel η zur Messrohrachse steht und auf der Seite der Messrohrachse verläuft, auf welcher sich der Messrohrauslauf befindet.

Der Begriff Ultraschallwandleraufnahme deutet auf die Aufnahme eines Ultraschallwandlers hin. Ein Ultraschallwandler besteht im Allgemeinen aus mindestens einem elektromechanischen Wandlerelement. Meist besteht ein Ultraschallwandler weiterhin jedoch zusätzlich noch aus einem Koppelelement und/oder einer Anpassungsschicht. Erfindungsgemäß ist die Ultraschallwandleraufnahme geeignet einen allgemein üblichen Ultraschallwandler aufzunehmen, d.h. mit dem Messrohr und/oder einem in das Messrohr integrierten Koppelelement akustisch zu koppeln, mindestens jedoch ist die Aufnahme jedoch so ausgestaltet, dass sie geeignet ist, ein elektromechanisches Wandlerelement aufzunehmen und akustisch mit dem Messrohr und/oder einem in das Messrohr integrierten Koppelelement akustisch zu koppeln. Die Ultraschallwandleraufnahmen verfügen dabei über Funktionsflächen bzw. Ankoppelstellen zur Ankopplung von elektromechanischen Wandlern bzw. Ultraschallwandlern, im Folgenden Wandleraufnahmeflächen genannt.

Das elektromechanische Wandlerelement wandelt die Ultraschallsignale nach dem Prinzip der Elektrostriktion oder der Magnetostriktion. Unter der Magnetostriktion wird die Längenänderung eines ferromagnetischen Stoffs infolge eines angelegten Magnetfelds verstanden. Die Elektrostriktion hingegen beschreibt die Deformation eines Dielektrikums infolge eines angelegten elektrischen Felds. Die Deformation ist dabei im Allgemeinen nicht abhängig von der Richtung des Felds. Der Piezoeffekt ist somit im Speziellen Teil der Elektrostriktion. In einer Ausgestaltung ist das elektromechanische Wandlerelement ein piezoelektrisches Element.

Das elektromechanische Wandlerelement erzeugt Ultraschallsignale und/oder wandelt empfangene Ultraschallsignale wiederum in elektrische Signale um und ist somit wesentlicher Bestandteil eines Ultraschallwandlers. Ultraschallwandler mit zumindest einem elektromechanischen Wandlerelement erzeugen Ultraschallsignale in Form von Ultraschallwellen. In Flüssigkeiten breiten sich Ultraschallwellen nur als Longitudinalwellen aus. Die angeregten Teilchen schwingen hierbei in Ausbreitungsrichtung um den Betrag der Amplitude. Ein Ultraschallsignal besteht somit aus mindestens einer Ultraschallwelle mit einer Wellenfront. Die Wellenfront steht dabei senkrecht zur Ausbreitungsrichtung der Ultraschallwellen.

Ein Ultraschallsignal ist in seiner Breite begrenzt. D.h. die Wellenfront hat eine endliche Ausdehnung. Das wesentliche Element zur Begrenzung der Breite eines Ultraschallsignals, ist die Fläche des Ultraschallwandlers, vom welchen die Ultraschallwelle ausgesendet wird und/oder die Fläche der Schallein- und/oder Schallauskoppelfläche, welche das Messmedium bei gefülltem Messrohr berührt. Der Einfachheit halber wird davon ausgegangen, dass sich ein Ultraschallsignal einer begrenzten Breite auf einem scharfen Schall- oder Signalpfad ausbreitet. Die Breite des Signalpfads ist dabei als punktförmig zu betrachten. Modellhaft breitet sich ein Ultraschallsignal also auf einem geraden Signalpfad aus. Die Ausbreitungsrichtung der Ultraschallwellen entspricht somit der Richtung des Ultraschallsignals auf dem Signalpfad. Ein Signalpfad zur Bestimmung und/oder Überwachung des Durchflusses eines Messmediums durch ein Messrohr wird gelegentlich auch als Messpfad bezeichnet.

Besitzen die Schallein- und/oder Schallauskoppelflächen einen näherungsweise kreisrunden Querschnitt, so ist der Mittelpunkt gleich dem Schwerpunkt der Schallein- und/oder Schallauskoppelflächen. Ist die Form der Schallein- und/oder Schallauskoppelflächen ungleich kreisförmig, z.B. oval, viereckig, sechseckig, achteckig oder mehreckig, ist der Mittelpunkt insbesondere der Schwerpunkt der Schallein- und/oder Schallauskoppelflächen.

Als Ausdehnung einer Fläche wird die Verbindungslinie zweier nicht benachbarter Punkte des Flächenrands durch den Mittelpunkt der Fläche bezeichnet. Die größte Ausdehnung ist entsprechend die längste Verbindung zwischen zwei Punkten des Flächenrands, welche den Mittelpunkt der Fläche schneidet. Bei einer Ellipse wirkt die Hauptachse, also die Verbindung zwischen den Hauptscheiteln, den Punkten der Ellipse mit dem größten Abstand zum Mittelpunkt, als größte Ausdehnung. Bei Vielecken mit mindestens vier Ecken ist die längste Diagonale die größte Ausdehnung. Ist die Schallein- und/oder Schallauskoppelflächen kreisförmig, also weist sie einen kreisförmigen Querschnitt auf, so sind alle Durchmesser näherungsweise gleich und betragen einer Ausgestaltung der Erfindung zufolge höchstens die Hälfte, insbesondere maximal ein Drittel, des Innendurchmessers des Messrohrs.

Weist das Messrohr einen anderen Querschnitt auf als näherungsweise kreisrund, ist es z.B. ein Vierkantrohr oder ist der Querschnitt des vom Messmedium durchströmbaren inneren Bereichs des Messrohrs beispielsweise elliptisch, so wird statt des Innendurchmessers ebenfalls die größte Ausdehnung des Querschnitts des Messrohrs herangezogen, d.h. also, dass die größte Ausdehnung der Schallein- und/oder Schallauskoppelflächen höchstens die Hälfte der größten Ausdehnung des Messrohrquerschnitts beträgt, insbesondere höchstens ein Drittel. Der Querschnitt des Messrohrs steht dabei senkrecht auf der Messrohrachse.

Stehen sich die der Schallein- und/oder Schallauskoppelflächen planparallel gegenüber, so sind die erste Schallein- und/oder Schallauskoppelfläche und die zweite der Schallein- und/oder Schallauskoppelfläche parallel zueinander. Erfindungsgemäß ist die erste Schallein- und/oder Schallauskoppelfläche nicht nur parallel zur zweiten Schallein- und/oder Schallauskoppelfläche, sondern steht dieser direkt gegenüber, d.h. die Verbindungslinie zwischen den Mittelpunkten steht senkrecht auf den jeweiligen Schallein- und/oder Schallauskoppelflächen. Weisen beide Flächen den gleichen Querschnitt auf und sind sie nicht zueinander verdreht, würden sie bei einer Verschiebung entlang der Verbindungslinie zur vollständigen gegenseitigen Deckung gelangen.

Sowohl die Messrohrachse, als auch die Messrohreinlauf- und Messrohrauslaufachse gilt als gerade Verbindungslinie zwischen mindestens zwei Mittelpunkten des Messrohrs, respektive des Messrohreinlaufs bzw. des Messrohrauslaufs. Genannte Achsen sind bezogen auf die jeweiligen Innendurchmesser, d.h. egal ob ein kreisrunder oder eckiger Querschnitt des Messrohrs, respektive des Messrohreinlaufs bzw. des Messrohrauslaufs vorliegt, die zur Bildung der Achsen notwendigen und hinreichenden Mittelpunkte gelten, gleichermaßen wie bei der Bestimmung der Mittelpunkte der elektromechanischen Wandlerelemente, als Schwerpunkte von bestimmten freien Querschnittsflächen des Messrohrs, respektive des Messrohreinlaufs bzw. des Messrohrauslaufs. Da sich der Querschnitt und damit der Innendurchmesser des Messrohrs und/oder des Messrohreinlaufs und/oder des Messrohrauslaufs über die jeweilige Länge des Messrohrs und/oder des Messrohreinlaufs und/oder des Messrohrauslaufs sowohl in seiner Abmessung als auch in seiner Form ändern kann, sind mindestens zwei bestimmte Querschnitte zur Bestimmung der Achsen erforderlich. In einer Ausgestaltung mit konstanten freien Querschnittsflächen der Rohrabschnitte, verlaufen die Achsen durch alle Mittelpunkte aller Querschnitte. Insbesondere werden die Querschnittsflächen am Anfang und am Ende des Messrohrs und/oder des Messrohreinlaufs und/oder des Messrohrauslaufs zur Bestimmung der Achsen herangezogen.

Ultraschallwandler weisen neben mindestens einem elektromechanischen Wandlerelement üblicherweise eine so genannte Koppelschicht oder ein so genanntes Koppelelement auf. Die Koppelschicht leitet die Ultraschallsignale vom elektromechanischen Wandlerelement zum Messmedium und koppelt sie jeweils in das ein oder andere ein und/oder aus. Die Koppelschicht besteht dabei bevorzugt aus einem Material, welches bestimmte akustische Eigenschaften, wie z.B. eine vorgebbare akustische Impedanz und/oder eine vorgebbare Schallgeschwindigkeit, aufweist. In einer besonderen Ausführungsform dient das Messrohr selbst als Koppelschicht. Wird z.B. ein Stahlrohr als Messrohr verwendet und das elektromechanische Wandlerelement ist ein piezoelektrisches Element, so ist eine Koppelschicht als Anpassungsschicht zwischen Wandlerelement und Messrohr vorsehbar. Ist jedoch das Messrohr aus Kunststoff, insbesondere aus einem Polymer, und/oder ist das Wandlerelement ein elektrostriktives Element, so ist das elektromechanische Wandlerelement direkt auf dem Messrohr anbringbar. Das Messrohr übernimmt in diesem Fall die Aufgabe der Koppelschicht, die akustische Kopplung zwischen Wandlerelement und Messmedium.

Somit weist ein Messsystem erfindungsgemäß mindestens zwei elektromechanische Wandlerelemente, z.B. piezoelektrische Elemente, auf, welche Ultraschallsignale auf zumindest einem ersten Signalpfad aussenden und/oder empfangen und jeweils eine Koppelschicht im Bereich zwischen einem elektromechanischem Wandlerelement und dem Messmedium leitet die Ultraschallsignale auf dem ersten Signalpfad. Statt einem elektromechanischen Wandlerelement können auch mehrere Wandlerelemente Verwendung finden. Diese sind z.B. nebeneinander und/oder übereinander in so genannten Stacks anzuordnen. Bei den Stacks sind die einzelnen Elemente in Serie (Reihe) oder in Sandwichbauweise kontaktiert und geschaltet.

Das erfindungsgemäße Messrohr ist deshalb so geformt, damit sich im Bereich des ersten Messpfads eine schnelle Strömung ausbildet. Die Ultraschallwandleraufnahmen sind also so ausgestaltet, dass der Messpfad zwischen den beiden elektromechanischen Wandlerelementen in einem Winkel ζ zur Messrohrachse steht und auf der Seite der Messrohrachse verläuft, auf welcher sich die schnelle bzw. die beschleunigte Strömung befindet. Messrohreinlauf und Messrohrauslauf sind entsprechend so angeordnet, dass sich im Messrohr auf einer Seite der Messrohrachse, auf welcher sich der Messrohrauslauf befindet, eine schnelle Strömung ausbildet.

In einer Weiterbildung der erfindungsgemäßen Lösung steht eine Verbindungslinie zwischen den Mittelpunkten der ersten und zweiten Schallein- und/oder Schallauskoppelfläche in einem Winkel η zur Messrohrachse (8) und verläuft auf der Seite der Messrohrachse verläuft, auf welcher sich der Messrohrauslauf befindet.

Die Messrohrachse und die Messrohrauslaufachse spannen eine erste gedachte Ebene auf. Eine zweite gedachte Ebene ist dann senkrecht zur ersten gedachten Ebene und schneidet die erste gedachte Ebene in einer ersten Schnittgeraden. Diese erste Schnittgerade ist in einer Ausgestaltung die Messrohrachse selbst. Dann schneidet die Verbindungslinie die zweite gedachte Ebene nicht.

Das erfindungsgemäße Messrohr ist so ausgestaltet, dass sich die erste und die zweite Schallein- und/oder Schallauskoppelfläche im Wesentlichen planparallel gegenüberstehen.

Eine weitere Weiterbildung der Erfindung ist darin begründet, dass die Ultraschallwandleraufnahmen jeweils mindestens eine Wandleraufnahmefläche aufweisen, welche mit den Ultraschallwandlern, beispielsweise also direkt mit elektromechanischen Wandlerelementen der Ultraschallwandler ohne zusätzliches Koppelelement akustisch koppelbar sind, welche Wandleraufnahmefläche sich im Wesentlichen planparallel gegenüberstehen und jeweils einen Mittelpunkt aufweisen, wobei eine Verbindungslinie zwischen den Mittelpunkten der ersten und zweiten Wandleraufnahmefläche in einem Winkel θ zur Messrohrachse steht und auf der Seite der Messrohrachse verläuft, auf welcher sich der Messrohrauslauf befindet.

Eine Wandleraufnahmefläche ist eine Funktionsfläche, auf welche die elektromechanischen Wandlerelemente aufsetzbar und akustisch koppelbar sind, wobei die Ultraschallwandleraufnahmen jeweils als Koppelelement fungieren können. Die Ultraschallwandleraufnahmen sind in einer Ausgestaltung der erfindungsgemäßen Lösung so ausgestaltet, dass sich die elektromechanischen Wandlerelemente im Wesentlichen planparallel gegenüberstehen und jeweils mit dem Messrohr akustisch koppelbar sind und dass eine Verbindungslinie zwischen den Mittelpunkten des ersten und zweiten elektromechanischen Wandlerelements in einem Winkel γ zur Messrohrachse steht und auf der Seite der Messrohrachse verläuft, auf welcher sich der Messrohrauslauf befindet. Gemäß einer Weiterbildung der erfindungsgemäßen Lösung beträgt der Winkel γ näherungsweise 0° bzw. 180°, d.h. die Verbindungslinie und die Messrohrachse sind parallel zueinander. In einer anderen Ausgestaltung ist der Winkel γ ungleich 0° bzw. 180°, d.h Verbindungslinie und Messrohrachse sind zueinander geneigt, wobei die Verbindungslinie die Messrohrachse nicht schneidet. In anderen Ausgestaltungen ist der Winkel γ näherungsweise 1° oder 2° oder 5° oder 8° oder 10° oder 12° oder 15°. Insbesondere ist der Winkel γ kleiner 35°.

Einer weiteren Ausgestaltung gemäß sind weisen die auf die Wandleraufnahmeflächen anbringbaren und akustisch koppelbaren Ultraschallwandler, mindestens also elektromechanische Wandlerelemente, jeweils einen Mittelpunkt auf und eine Verbindungslinie zwischen den Mittelpunkten des ersten und zweiten Ultraschallwandlers, also z.B. des ersten und zweiten elektromechanischen Wandlerelements, steht in einem Winkel γ zur Messrohrachse steht und verläuft auf der Seite der Messrohrachse, auf welcher sich der Messrohrauslauf befindet.

Die elektromechanischen Wandlerelemente sind in einer Ausgestaltung lösbar mit dem Messrohr akustisch gekoppelt. Sie sind jederzeit auswechselbar, und auch durch Ultraschallwandler einer anderen Größe zu ersetzen, solange sie in die Aufnahme passen. Die Ultraschallwandler sind dann kein fester bzw. integraler Bestandteil des Messrohrs.

Eine weiteren Weiterbildung der Erfindung ist darin zu sehen, dass ζ gleich γ ist und/oder dass ζ gleich η ist und/oder dass ζ gleich θ ist und/oder dass η gleich γ ist und/oder dass η gleich θ und/oder dass θ gleich γ ist.

Gemäß einer Ausgestaltung des Messrohrs ist dieses so ausgestaltet ist, dass sich die Wandleraufnahmeflächen und die Schallein- und/oder Schallauskoppelflächen im Wesentlichen planparallel gegenüberstehen, d.h. dass sowohl die Wandleraufnahmeflächen senkrecht auf dem Signalpfad stehen, als auch dass die Schallein-/auskoppelflächen senkrecht auf dem Signalpfad stehen.

Eine weitere Weiterbildung des erfindungsgemäßen Messsystems ist darin zu sehen, dass der Messrohreinlauf und der Messrohrauslauf auf sich gegenüberliegenden Seiten des Messrohrs angeordnet sind. Der Messrohreinlauf und der Messrohrauslauf befinden sich also auf unterschiedlichen Seiten der gedachten zweiten Ebene.

Einer Weiterbildung zufolge beträgt der Winkel α näherungsweise 45°. In einer weiteren Ausgestaltung beträgt der Winkel α erfindungsgemäß näherungsweise 45° und/oder der Winkel β beträgt erfindungsgemäß näherungsweise 45°. In einer anderen Ausgestaltung liegen die Winkel α und β jeweils zwischen 30 und 60°.

Einer weiteren Weiterbildung zufolge liegen die Messrohrachse, die Messrohreinlaufachse und die Messrohrauslaufachse im Wesentlichen in einer Raumebene. Alle drei Achsen liegen in der ersten gedachten Ebene. Eine Ausgestaltung des Messrohrs zeigt, dass die Verbindungslinie zwischen den Mittelpunkten der ersten und zweiten Schallein- und/oder Schallauskoppelfläche im Wesentlichen in der gleichen Raumebene liegt. Einer anderen Ausgestaltung der Erfindung gemäß, liegt auch die Verbindungslinie zwischen den Mittelpunkten der elektromechanischen Wandlerelemente in der ersten gedachten Ebene.

Eine Weiterbildung der Lösung besteht darin, dass das Messrohr eine zusätzliche Einlaufstrecke, somit einen zweiten Messrohreinlauf, und eine zusätzliche Auslaufstrecke, somit einen zweiten Messrohrauslauf, aufweist, welche zusätzliche Einlaufstrecke am Messrohreinlauf angeordnet ist und welche zusätzliche Auslaufstrecke am Messrohrauslauf angeordnet ist, wobei die zusätzliche Einlaufstrecke eine Mittelachse, also eine zweite Messrohreinlaufachse, aufweist und die zusätzliche Auslaufstrecke eine Mittelachse, also eine zweite Messrohrauslaufachse, aufweist, wobei die zweite Messrohreinlaufachse einen Winkel von im Wesentlichen 90° zur Messrohrachse aufweist und wobei die zweite Messrohrauslaufachse einen Winkel von im Wesentlichen 90° zur Messrohrachse aufweist.

Gemäß einer Ausführung weist also der erste Messrohreinlauf einen Winkel von ca. 45° zum Messrohr auf und der zusätzliche Messrohreinlauf wiederum einen Winkel von ca. 45° zum ersten Messrohreinlauf.

Die Mittelachsen sind dabei wieder die Verbindungslinien zwischen den Mittelpunkten der freien Schnittflächen durch das jeweilige Ende der zusätzlichen Ein- oder Auslaufstrecke. Die zusätzlichen Ein- und/oder Auslaufstrecken sind einer Ausgestaltung zufolge gerade, d.h. deren Mittelachse ist im Wesentlichen geradenförmig.

Der zweite Messrohreinlauf, respektive der zweite Messrohrauslauf, sind am ersten Messrohreinlauf, respektive am ersten Messrohrauslauf, lösbar befestigbar, wobei sowohl der zweite Messrohreinlauf als auch der zweite Messrohrauslauf das Messrohr direkt berühren. Sie grenzen an das Ende des Messrohreinlaufs bzw. des Messrohrauslaufs, welches vom Messrohr abgewandt ist. Einer anderen Ausgestaltung sind der zweite Messrohreinlauf und/oder der zweite Messrohrauslauf integraler Bestandteil des Messrohrs. In einer Variante der Erfindung ist das Messrohr mit Messrohreinlauf und Messrohrauslauf und/oder mit zweitem Messrohreinlauf und/oder zweitem Messrohrauslauf monolitisch aufgebaut.

Ein weitergebildetes erfindungsgemäßes Messrohr besteht aus einem Polymerwerkstoff. Beispiele für verwendete Polymerwerkstoffe sind PPSU, PEI, PP, PE oder PVDF. Das Messrohr aus Polymerwerkstoff ist in einer Ausgestaltung Gamma-sterilisierbar.

Insbesondere sind auch der erste Messrohreinlauf und/oder der erste Messrohrauslauf, wie auch der zweite Messrohreinlauf und/oder der zweite Messrohrauslauf aus dem gleichen Material gerfertigt. In einer Ausgestaltung des erfindungsgemäßen Messrohrs besteht das Messrohr aus einem gamma-sterilisierbaren Kunststoff.

Gemäß einer weiteren Weiterbildung der erfindungsgemäßen Lösung ist die Fläche der ersten Schallein- und/oder Schallauskoppelfläche ungleich der Fläche der ersten Wandleraufnahmefläche und/oder die Fläche der zweiten Schallein- und/oder Schallauskoppelfläche ist ungleich der Fläche der zweiten Wandleraufnahmefläche.
Das Messrohr weist Koppelemente, hier insbesondere die Ultraschallwandleraufnahmen, auf, welche von der Wandleraufnahmefläche bis zur Schallein- und/oder Schallauskoppelfläche eine Verjüngung des Querschnitts des Koppelelements aufweisen oder welche Koppelelemente von der Wandleraufnahmefläche bis zur Schallein- und/oder Schallauskoppelfläche eine Vergrößerung des Querschnitts des Koppelelements aufweisen. Die Verjüngung und/oder die Vergrößerung kann dabei linear, diskret oder exponentiell sein. Beispielhaft weist ein solches Koppelelement einen zylindrischen Längsschnitt, die Form eines Kegelstumpfs oder die Form eines Exponentialhorns auf. Dadurch kann beispielsweise ein elektromechanisches Wandlerelement einer bestimmten Größe für Messrohre mit verschiedenen Größen, insbesondere unterschiedlichen Innendurchmessern verwendet werden.

Eine weitere Weiterbildung der Erfindung ist darin zu sehen, dass das Messrohr eine dritte Ultraschallwandleraufnahme zur Aufnahme zumindest eines dritten elektromechanischen Wandlerelements und vierte Ultraschallwandleraufnahme zur Aufnahme zumindest eines vierten elektromechanischen Wandlerelements aufweist, wobei die dritte Ultraschallwandleraufnahme ein drittes Koppelement zwischen drittem elektromechanischen Wandlerelement und dem Messmedium ist und eine dritte Schallein- und/oder Schallauskoppelfläche aufweist, wobei die vierte Ultraschallwandleraufnahme ein viertes Koppelement zwischen viertem elektromechanischen Wandlerelement und Messmedium ist und eine vierte Schallein- und/oder Schallauskoppelfläche aufweist, wobei die dritte und vierte Ultraschallwandleraufnahme so ausgestaltet sind, dass ein zweiter Messpfad zwischen dem dritten und dem vierten elektromechanischen Wandlerelement in einem Winkel ξ zur Messrohrachse steht und auf der Seite der Messrohrachse verläuft, welche dem ersten Messpfad gegenüberliegt.
Die bisher aufgezeigten Ausgestaltungen und Weiterbildungen bezüglich der Winkel des ersten Messpfads und der Abmessungen zwischen den einzelnen Bauteilen des ersten Messpfad, wie z.B. der Wandleraufnahmeflächen, den Schallein- und/oder Schallauskoppelflächen etc, sind hier ebenfalls auf den zweiten Messpfad übertragbar, insbesondere sind in einer speziellen Ausgestaltung der erste und der zweite Messpfad parallel zueinander.

Gemäß einer Weiterbildung des erfindungsgemäßen Messrohrs ist zumindest eine Ultraschallwandleraufnahme topfförmig ausgestaltet, mit der Wandleraufnahmefläche der Ultraschallwandleraufnahme als Topfboden.

Gemäß einer weiteren Weiterbildung des erfindungsgemäßen Messsystems sind im Messrohr querschnittsverengende Ringe vorgesehen. Die Ringe wirken querschnittsverengend im Messrohr und dienen zur Strömungskonditionierung bzw. zur gezielten Beschleunigung oder Verlangsamung der Strömung des Messmediums im Messrohr. Die Ringe ragen mindestens 1/5 des Innendurchmessers des Messrohrs in das Messrohr hinein, insbesondere mindestens 1/10, insbesondere mindestens 1/30. So ist ein einzelner Ring vorgesehen, welcher im Messrohr im Bereich des Messrohreinlaufs platziert ist oder es sind mehrere, insbesondere zwei Ringe vorgesehen, welche jeweils den gleichen Abstand zu ihrem nächstliegenden Messrohreinlauf bzw. von Messrohrauslauf aufweisen. Der Abstand vom Ring in Bereich des Messrohreinlaufs vom Messrohreinlauf beträgt dabei zwischen 0 und der Hälfte der Länge des Messrohrs bzw. der Hälfte des Abstands von der ersten zur zweiten Schallein- und/oder Schallauskoppelfläche.

Einer weiteren Weiterbildung der Erfindung zufolge beträgt der Abstand zwischen einer ersten Schallein- und/oder Schallauskoppelfläche und einer zweiten Schallein- und/oder Schallauskoppelfläche höchstens das 15fache des Innendurchmessers des Messrohrs, einer Ausgestaltung zufolge höchstens das 12fache, einer anderen Ausgestaltung zufolge höchstens das Zehnfache, in einer anderen Ausgestaltung höchstens das Achtfache, gemäß einer anderen Ausgestaltung höchstens das Fünffache und gemäß einer weiteren Ausgestaltung mindestens das Zweifache.

Die erste Schallein- und/oder Schallauskoppelfläche ist dabei dem ersten elektromechanischen Wandlerelement zugeordnet, d.h. das Ultraschallsignal, vom ersten elektromechanischen Wandlerelement erzeugt wird, wird über die erste Schallein- und/oder Schallauskoppelfläche in das Messmedium eingekoppelt. Gleichermaßen wird das vom ersten elektromechanischen Wandlerelement empfangene Ultraschallsignal über die erste Schallein- und/oder Schallauskoppelfläche aus dem Messmedium ausgekoppelt. Entsprechendes gilt für die zweite Schallein- und/oder Schallauskoppelfläche und das zweite elektromechanische Wandlerelement.

Gemäß einer weiteren Weiterbildung der erfindungsgemäßen Lösung weist der Messrohreinlauf und/oder der Messrohrauslauf einen näherungsweise gleichen Querschnitt wie das Messrohr auf, d.h. also der Innendurchmesser des Messrohreinlaufs und/oder des Messrohrauslaufs und/oder des Messrohrs sind bei einem näherungsweise kreisrunden Messrohreinlauf und/oder Messrohrauslauf und/oder Messrohr näherungsweise konstant.

In einer weiteren Weiterbildung der erfindungsgemäßen Lösung beträgt der Innendurchmesser des Messrohrs mindestens 1 mm, insbesondere mindestens 2mm, in einer anderen Ausgestaltung mindestens 5mm, in einer weiteren Ausgestaltung mindestens 10mm, insbesondere mindestens 20mm, in weiteren Ausgestaltungen beträgt der Innendurchmesser des Messrohrs bis zu 200mm. Die Länge des Messrohrs beträgt erfindungsgemäß mindestens 5mm und kann beispielsweise bis zu 1000mm betragen. Gemäß einer Ausgestaltung beträgt die Messrohrlänge ungefähr das Zweifache des Innendurchmessers des Messrohrs, in einer anderen Ausgestaltung ungefähr das Dreifache oder insbesondere das Fünffache oder die Messrohrlänge beträgt bis zum Zehnfachen des Innendurchmessers des Messrohrs.

Das Messrohr ist erfindungsgemäß so ausgestaltet, dass es zur Bestimmung und/oder Überwachung des Durchflusses von Newtonschen Flüssigkeiten wie Wasser oder Flüssigkeiten mit einer Viskosität zwischen 0,1 und 20 mPas verwendbar ist.

Die Erfindung wird anhand der nachfolgenden Figuren näher erläutert, in denen jeweils ein Ausführungsbeispiel dargestellt ist. Gleiche Elemente sind in den Figuren mit gleichen Bezugszeichen versehen.
- Fig. 1: zeigt schematisch ein erfindungsgemäßes Messsystem mit einem erfindungsgemäßen Messrohr,
- Fig. 2: zeigt ein weiteres erfindungsgemäßes Messsystem mit einem erfindungsgemäßen Messrohr,
- Fig. 3: zeigt ein weiteres erfindungsgemäßes Messsystem mit einem erfindungsgemäßen Messrohr,
- Fig. 4: zeigt verschiedene Koppelelemente im Querschnitt,
- Fig. 5: zeigt ein erfindungsgemäßes Messsystem mit zwei Ultraschallwandlern, einem Messrohr und einer Grundplatte in einer Draufsicht,
- Fig. 6: zeigt ein 3 dimensionales Abbild eines erfindungsgemäßen Messrohrs,
- Fig. 7: zeigt einen detaillierten Querschnitt durch ein erfindungsgemäßes Messsystem
- Fig. 8: zeigt einen erfindungsgemäßen Bügelverschluss in 3D,
- Fig. 9: zeigt eine Kabelführung in einer erfindungsgemäßen Grundplatte,
- Fig. 10: zeigt ein weiteres erfindungsgemäßes Messrohr.

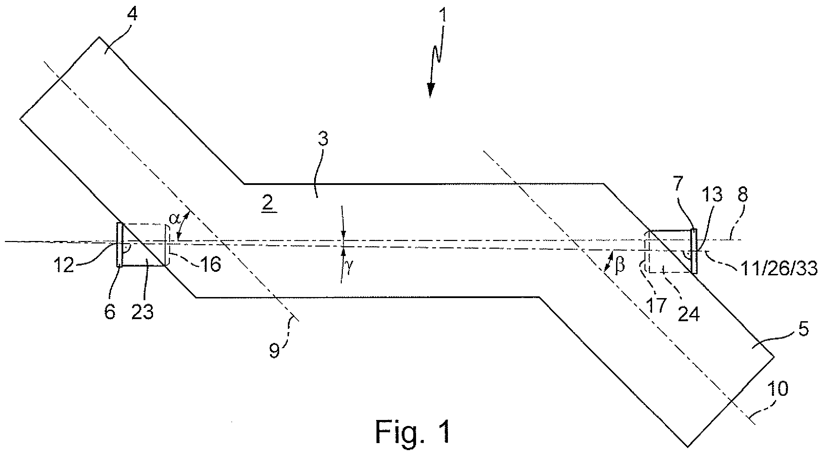

In Fig. 1 ist ein erfindungsgemäßes Messrohr 3 eines erfindungsgemäßen Messsystems 1 schematisch im Schnitt dargestellt. Das Messrohr 3 weist jeweils einen ersten Messrohreinlauf 4 und einen ersten Messrohrauslauf 5 auf. Der Messrohreinlauf 4 weist einen über seine Länge näherungsweise konstanten Querschnitt auf. Dieser ist in dieser Ausgestaltung näherungsweise gleich dem Querschnitt des Messrohrs 3, sowohl in Form als auch in Größe. Der Messrohrauslauf 5 hingegen ist leicht kegelförmig, so dass der Querschnitt des Messrohrauslaufs 5, welcher an das Messrohr grenzt, etwas größer ist, als der Querschnitt des Messrohrauslaufs 5, welcher als Prozessanschluss nutzbar ist. Sowohl die Messrohrachse 8, als auch die Messrohreinlaufachse 9 und die Messrohrauslaufachse 10 liegen in einer Raumebene, hier die Zeichenebene, wobei der Messrohreinlauf 4 und der Messrohrauslauf 5 auf sich gegenüberliegenden Seiten des Messrohrs 3 angeordnet sind.

Scheibenförmige elektromechanische Wandlerelemente 6 und 7, zur Wandlung elektrischer Signale in Ultraschallsignale und/oder umgekehrt, sind an Ultraschallwandleraufnahmen 23 und 24 akustisch gekoppelt. Die Ultraschallwandleraufnahmen 23 und 24 weisen im Wesentlichen zylindrische Form auf. Sie übernehmen die Funktion der Kopplung der Ultraschallsignale in das Messmedium 2. Dazu werden die Ultraschallsignale von den elektromechanischen Wandlerelementen 6, 7 erzeugt und an den Wandleraufnahmeflächen in die Ultraschallwandleraufnahmen 23 und 24 eingekoppelt, welche ihrerseits die Ultraschallsignale bis zum Messmedium 2 leiten und über ihre Schallein- bzw. Schallauskoppelflächen 16 und 17 die Ultraschallsignale in das Messmedium 2 einkoppeln. Werden die Ultraschallsignale vom Messmedium 2 zurück zu den elektromechanischen Wandlerelementen geführt, so werden sie an den Schallein- bzw. Schallauskoppelflächen 16 und 17 aus dem Messmedium 2 ausgekoppelt und bis zu den elektromechanischen Wandlerelementen 6, 7 von den Ultraschallwandleraufnahmen 23 und 24 geleitet. Die Schallein- bzw. Schallauskoppelflächen 16 und 17 sind hier kleiner als die Flächen der elektromechanischen Wandlerelementen 6, 7. Die Ultraschallwandleraufnahmen 23 und 24 besitzen zumindest im Bereich der Schallein- bzw. Schallauskoppelflächen 16 und 17 die Form eines Exponentialhorns. Die Ultraschallsignale breiten sich entlang eines so genannten Signal- oder Messpfads aus. Modellhaft wird hier ein geradenförmiger Messpfad beschreiben. Die Wellenfronten des Ultraschallsignals stehen im Wesentlichen senkrecht auf dem Messpfad.

Sowohl die Schallein- bzw. Schallauskoppelflächen 16 und 17, als auch die elektromechanischen Wandlerelementen 6, 7 und die Wandleraufnahmeflächen der Ultraschallwandleraufnahmen 23 und 24 besitzen einen im Wesentlichen kreisrunden Querschnitt. Die Mittelpunkte 27, 28 der Schallein- bzw. Schallauskoppelflächen 16 und 17 und die Mittelpunkte der elektromechanischen Wandlerelementen 6, 7 und die der Wandleraufnahmeflächen der Ultraschallwandleraufnahmen 23 und 24 liegen auf einer einzigen geraden.

Da elektromechanische Wandlerelemente 6, 7 näherungsweise planparallel zu den Schallein- bzw. Schallauskoppelflächen 16, 17 sind und sich die Schallein- bzw. Schallauskoppelflächen 16, 17 im Wesentlichen planparallel gegenüberstehen und sich die Querschnitte der Ultraschallwandleraufnahmen 23 und 24 von den Wandleraufnahmeflächen zu den Schallein- bzw. Schaflauskoppelflächen 16, 17 achsensymmetrisch ändern, gilt der Messpfad als zusammenfallend mit der Verbindungslinie 11 zwischen den Mittelpunkten 12 und 13 der elektromechanischen Wandlerelementen 6, 7 und damit sind der Winkel γ zwischen der Verbindungslinie 11 zwischen den Mittelpunkten 12 und 13 des ersten und zweiten elektromechanischen Wandlerelements 6, 7 und zwischen der Messrohrachse 8 und der Winkel η zwischen der Verbindungslinie zwischen den Mittelpunkten der Schallein- und/oder Schallauskoppelflächen 16, 17 und der Messrohrachse 8 und der Winkel θ zwischen der Verbindungslinie zwischen den Mittelpunkten der Wandleraufnahmeflächen und der Messrohrachse 8 gleich und gleich dem Winkel ζ des Messpfads.

Der Messpfad oder auch Signalpfad, welcher hier gleich der Verbindungslinie 11 zwischen den Mittelpunkten 12 und 13 der elektromechanischen Wandlerelementen 6, 7 ist, ist leicht zur Messrohrachse 8 geneigt. Der Winkel ζ bzw. γ beträgt hier ca. 5°. Jedoch verläuft der Messpfad 11 vollständig auf der Seite der Messrohrachse 8, auf welcher sich der Messrohrauslauf 5 befindet. Eine erste gedachte Raumebene wird, wie bereits beschreiben, von der Messrohrachse 8 und den Messrohreinlauf- und Messrohrauslaufachsen 9 und 10 aufgespannt. Eine zweite gedachte Ebene ist dann senkrecht zur ersten gedachten Ebene und schneidet die erste gedachte Ebene in einer ersten Schnittgeraden. Diese erste Schnittgerade ist in dieser Ausgestaltung die Messrohrachse 8 selbst. Dann schneidet die Verbindungslinie zwischen den Mittelpunkten der Schallein- und/oder Schallauskoppelflächen 16, 17 bzw. hier der Messpfad die zweite gedachte Ebene nicht. Der Messpfad 11 befindet sich auf der Seite der zweiten gedachten Ebene, auf welcher auch der Messrohrauslauf 5 am Messrohr 3 angeordnet ist.

Durch die bereits aufgezeigten Bedingungen sind die Flächen der elektromechanischen Wandlerelements 6, 7, der Wandleraufnahmeflächen und insbesondere der Schallein- und/oder Schallauskoppelflächen 16, 17 kleiner als der freie Querschnitt des Messrohrs 3, welcher hier dem Innendurchmesser des Messrohrs 3 ableitbar ist.

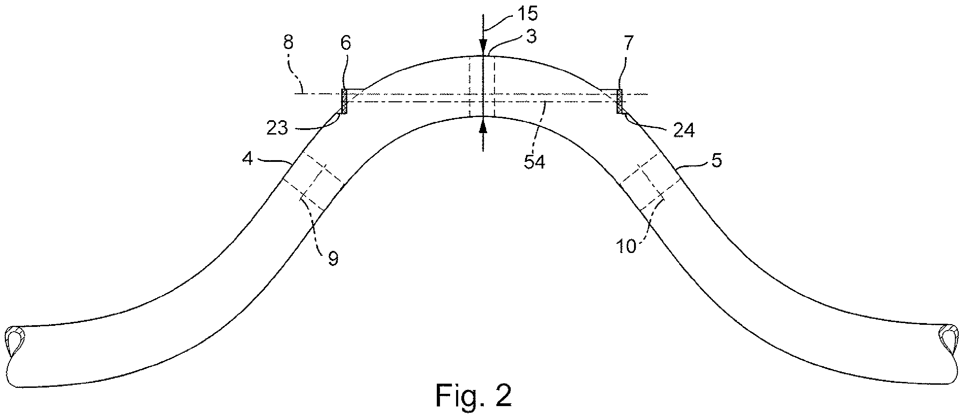

Fig. 2 offenbart ein beispielhaftes, nicht erfindungsgemäßes Messsystem 1 mit einem Messrohr 3. Das Messrohr 3 hat in diesem Ausführungsbeispiel einen näherungsweise kreisrunden Querschnitt und eine, relativ zu seinem Durchmesser, kurze Längsausdehnung. Auch der Messrohreinlauf 4 und der Messrohrauslauf 5 haben näherungsweise gleiche und kreisrunde Querschnitte. Auch diese sind, relativ zu ihren Querschnitten gesehen, kurz. In diesem Ausführungsbeispiel grenzen der Messrohreinlauf 4 und der Messrohrauslauf 5 nicht direkt an das Messrohr 3. Sie sind mit diesem jedoch jeweils über ein Zwischenrohr 73, 74 verbunden. Die Zwischenrohre 73, 74 sind gekrümmt und bzw. gebogen. Eine Definition von geradenförmigen Achsen in den Zwischenrohren 73, 74 ist daher nicht einfach möglich. Sowohl das Messrohr 3, als auch der Messrohreinlauf 4 und der Messrohrauslauf 5, weisen hier eine bestimmte Länge mit einer geraden Mittelachse 8, 9, 10 auf, auf welcher alle Mittelpunkte des jeweiligen Rohrs 3, 4, 5 liegen.

Die Messrohrauslaufachse 10 und Messrohrachse 8 spannen eine erste gedachte Ebene auf, also sowohl die Messrohrauslaufachse 10 als auch die Messrohrachse 8 liegen in der ersten gedachten Ebene, hier der Zeichenebene. Senkrecht zu dieser ersten gedachten Ebene verläuft eine zweite gedachte Ebene, wobei die Messrohrachse 8 in dieser zweiten gedachten Ebene liegt, die Messrohrachse 8 ist also Teil der ersten Schnittgeraden zwischen erster und zweiter gedachter Ebene. Die Verbindungslinie zwischen den Mittelpunkten der sich hier planparallel gegenüberstehenden ersten und zweiten elektromechanischen Wandlerelementen 6 und 7, welche hier gleich dem einbeschriebenen Messpfad gleicht, verläuft nun auf der Seite des Messrohrauslaufs und schneidet die zweite Ebene nicht. Der Messpfad liegt vielmehr in einer gedachten Drittelebene, welche parallel zur zweiten gedachten Ebene den Innendurchmesser 15 des Messrohrs 3 drittelt. Entlang des Mess- oder auch Signalpfads erfolgt die Ausbreitung der von den elektromechanischen Wandlerelementen 6 und 7 erzeugten Ultraschallwellen, deren gemessene Laufzeitdifferenz in und entgegen der Strömung des Messmediums im Messrohr 3 in die Berechnung des Durchflusses mit einfließt.

Dadurch dass der Messpfad 54 in einem Bereich des Messrohrs 3 angeordnet ist, wo durch die besondere Form des Messrohrs 3 ein durch Kalibrierung bekanntes Strömungsprofil vorliegt, so befindet sich der Messpfad 54 z.B. in einer im Vergleich zu der im Bereich der Messrohrachse vorherrschenden Strömung beschleunigten Strömung, ist die Qualität der Messung bzw. Bestimmung des Durchflusses, insbesondere für viskose Messmedien oder insgesamt sehr langsame Strömungen und/oder Durchflüsse, erhöht.

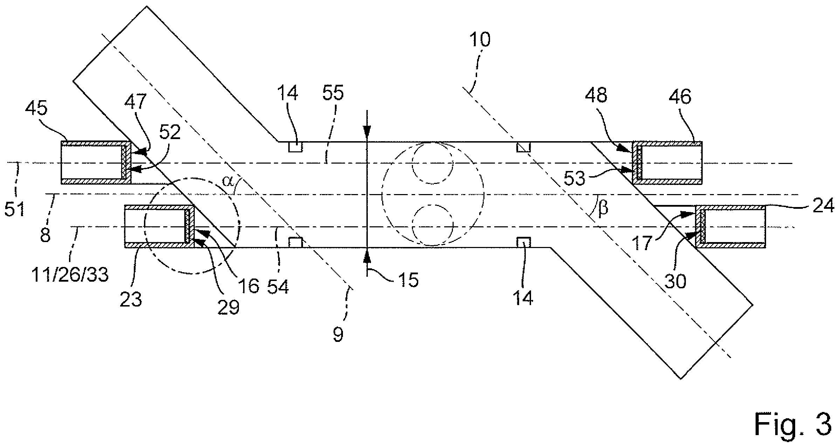

Fig. 3 zeigt ein weiteres erfindungsgemäßes Messrohr 3 eines erfindungsgemäßen Messsystems 1 schematisch im Schnitt dargestellt. Es weist im Wesentlichen gleiche Querschnitte des Messrohrein- 4 und auslaufs 5 und des Messrohrs 3 auf. Sowohl der Messrohreinlauf 4, als auch der Messrohrauslauf 5 weisen einen Winkel von ca. 45° zur Messrohrachse auf, also gilt α ≈ β ≈ 45°. Weiterhin weist das Messrohr 3 vier Ultraschallwandleraufnahmen 23, 24, 45, 46 auf. Die Ultraschallwandleraufnahmen 23, 24, 45, 46 sind jeweils topfförmig ausgestaltet. In die topfförmigen Ultraschallwandleraufnahmen 23, 24, 45, 46 können elektromechanische Wandlerelemente 6, 7, 19, 20 eingebracht werden. Die Ultraschallwandleraufnahmen 23, 24, 45, 46 dienen dann als Koppelelemente zwischen den elektromechanischen Wandlerelementen 6, 7, 19, 20 und dem Messmedium 2 im Messrohr 3. Die elektromechanischen Wandlerelemente 6, 7, 19, 20 werden mit den Wandleraufnahmeflächen 29, 30, 52, 53 der Ultraschallwandleraufnahme 23, 24, 45, 46 akustisch gekoppelt. In diesem Ausführungsbeispiel stellen die Wandleraufnahmeflächen 29, 30, 52, 53 gleichermaßen die Topfinnenböden der topfförmigen Ultraschallwandleraufnahmen 23, 24, 45, 46 dar.

Die Verbindungslinie 26 zwischen den Mittelpunkten 27 und 28 der ersten und zweiten Schallein- und/oder Schallauskoppelfläche 16, 17, welche hier der Verbindungslinie 11 zwischen des ersten und zweiten elektromechanischen Wandlerelements 6, 7 entspricht, weist also erfindungsgemäß einen Winkel γ zur Messrohrachse 8 auf. Hier ist dieser Winkel γ 0° bzw. 180°, d.h. die Verbindungslinie 26 und Messrohrachse 8 sind parallel zueinander. Ebenso verhält es sich mit der Verbindungslinie 51 zwischen den Mittelpunkten 49 und 50 der dritten und vierten Schallein- und/oder Schallauskoppelfläche 47, 48.

Die vier Ultraschallwandleraufnahmen 23, 24, 45, 46 liegen sich paarweise gegenüber, wobei die erste und die dritte Ultraschallwandleraufnahme 23, 45 im Bereich des Messrohreinlaufs 4 liegen und die zweite und die vierte Ultraschallwandleraufnahme 24, 46 im Bereich des Messrohrauslaufs 5 angeordnet sind. Dadurch ergeben sich zwei Messpfade 54, 55, wobei sich der erste Messpfad 54 zwischen dem ersten und zweiten elektromechanischen Wandlerelements 6 und 7 befindet, welche hier in der ersten und zweiten Ultraschallwandleraufnahme 23, 24 angeordnet sind, und wobei sich der zweite Messpfad 55 zwischen den in der dritten und vierten Ultraschallwandleraufnahme 45, 46 angeordneten dritten und vierten elektromechanischen Wandlerelementen 19 und 20 befindet. Dabei sind beide Messpfade parallel zur Messrohrachse 8, d.h. sie stehen in einem Winkel ζ, respektive ξ,vοn näherungsweise 0° bzw. 180° zur Messrohrachse 8, und beide Messpfade 54, 55 fallen jeweils mit den jeweiligen Verbindungslinien 11, 51, 26, 33 zwischen den Mittelpunkten der bereits bekannten Flächen der Schalleinkoppel- und/oder Schallauskoppelfläche 16, 17, 47, 48 bzw. der Wandleraufnahmeflächen 29, 30, 52, 53 zusammen. Die sich paarweise gegenüberstehenden Wandlerelemente 6 und 7, sowie 19 und 20 sind somit im Wesentlichen planparallel zueinander. Es versteht sich von selbst, dass sowohl die elektromechanischen Wandlerelementen 6, 7, 19, 20 als auch die Schalleinkoppel- und/oder Schallauskoppelflächen 16, 17, 47, 48 wesentlich kleiner sind, als der Messrohrdurchmesser 15.

Wie die Abbildung veranschaulicht, teilt die Messrohrachse 8 den Querschnitt des Innendurchmessers 15 des Messohrs 3 in zwei gleichgroße Teile. Wie ebenfalls unschwer zu erkennen, wird dieser geteilte Innendurchmesser 15 wiederum von dem ersten Messpfad 54 geteilt. Die sich gegenüberstehenden Schalleinkoppel- und/oder Schallauskoppelflächen 16 und 17 befinden sich vollständig und deutlich auf der Seite der Messrohrachse 8, auf welcher auch der Messrohrauslauf 5 liegt. Daher liegt der erste Messpfad 54 auch deutlich jenseits einer Linie, welche den Innendurchmesser 15 des Messrohrs 3 drittelt. Hier liegt der erste Messpfad 15 sogar auf der Seite einer so genannten Viertelebene, also einer Ebene parallel zu einer zweiten gedachten Raumebene, welche Viertelebene den Innendurchmesser 15 des Messrohrs 3 viertelt, auf welcher Seite der gedachten Viertelebene auch der Messrohrauslauf 5 angeordnet ist, wobei die zweite gedachte Raumebene senkrecht zu einer ersten Raumebene steht, mit der Messrohrachse 8 als Schnittgeraden zwischen erster und zweiter Raumebene, welche erste Raumebene von der Messrohrachse 8 und dem Messrohrauslauf 5 aufgespannt wird.

Zusätzlich weist das Messrohr 3 auf seiner Innenseite zwei Ringe 14 auf, welchen den freien Querschnitt des Messrohrs 3 verkleinern. Dadurch wird die Strömung des Messmediums im Messrohr 3 konditioniert und die Messgenauigkeit erhöht. Die Ringe ragen 1/10 des Innendurchmessers des Messrohrs in das Messrohr hinein. Jeder Ring hat einen Abstand von dem zu ihm nächstliegenden Messrohrein- 4 und/oder -auslauf 5 von 0 bis 1/2 der Messrohrlänge zueinander. Durch die Ringe wird die eine Linearisierung der Messcharakteristik erreicht, die aber gleichzeitig eine Veränderung des Algorithmus zur Reynoldszahlenbestimmung erfordert.

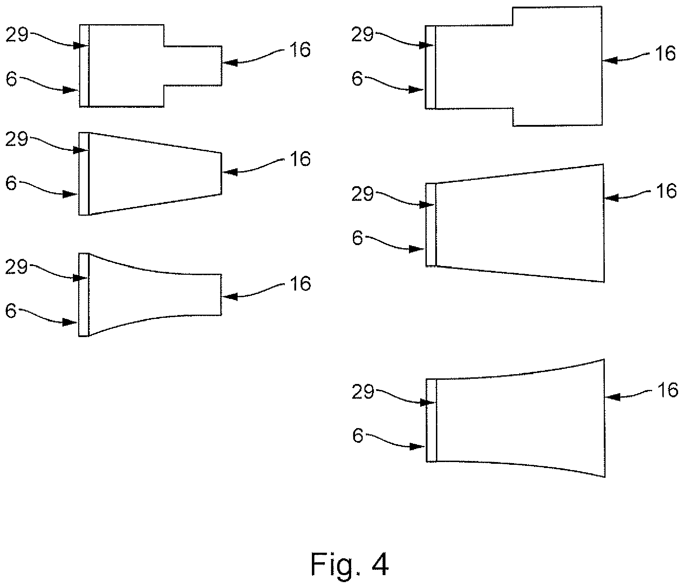

In Fig. 4 sind verschiedene Koppelelemente im Querschnitt gezeichnet. Durch eine Verkleinerung der Querschnittsfläche von der Wandleraufnahmefläche 29 zur Schallein- und/oder Schallauskoppelfläche 16 wird die Signalenergie des elektromechanischen Wandlerelements 6 gebündelt. Dies ist vorteilhaft für die Abstrahlung von Ultraschallsignalen. Es wird ein schärferer Ultraschallstrahl erhalten. Umgekehrt wirkt die Vergrößerung der Querschnittsfläche von der Wandleraufnahmefläche 29 zur Schallein- und/oder Schallauskoppelfläche 16 als Trichter für eintreffende Ultraschallsignale. Ihre Signalenergie wird wiederum vor dem Auftreffen auf das elektromechanische Wandlerelement 6 gebündelt.

Die Koppelelemente nehmen dabei verschiedene Formen an. Dargestellt ist lediglich eine Auswahl ohne Anspruch auf Vollständigkeit. Neben der Abstufung des Koppelelements sind auch Koppelelemente in Form eines Kegelstumpfs oder eines Exponentialhorns dargestellt. Es ist ebenfalls ein System aus akustischen Linsen vorstellbar.

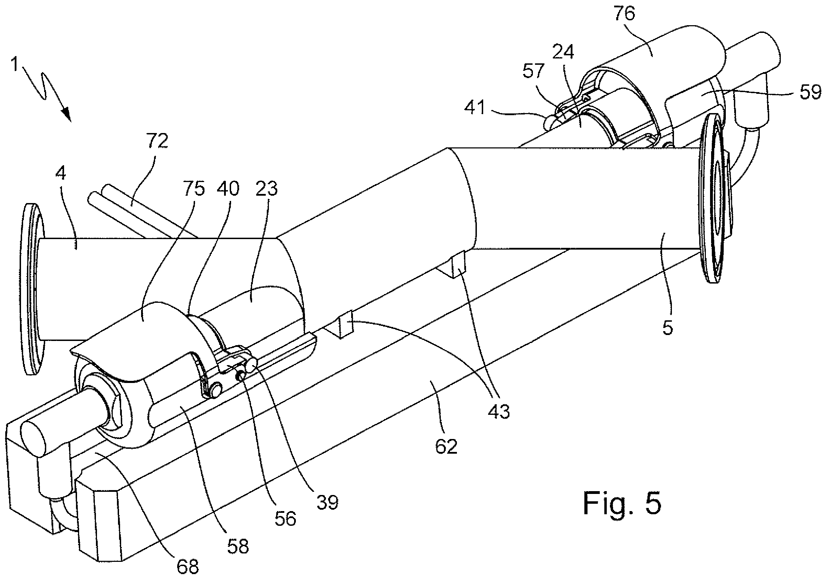

Fig. 5 skizziert dreidimensional ein erfindungsgemäßes Messsystem 1. Das Messsystem umfasst eine Grundplatte 62, mit einer nicht dargestellten Kupplung zur Befestigung des Messrohrs 3. Das Messrohr 3 wiederum weist einen zur Kupplung der Grundplatte 62 passenden Stecker 43 auf. Durch Einstecken des Steckers 43 in die Kupplung 44 ist das Messrohr 3 lösbar mit der Grundplatte 62 verbunden und gegen verdrehen und verschieben gesichert. Lediglich durch Ausstecken lässt sich das Messrohrs 3 relativ zur Grundplatte 62 bewegen. Das Messrohr 3 weist erfindungsgemäß einen Messrohreinlauf 4 und einen Messrohrauslauf 5 auf, welche hier in einer Raumebene liegen.

Weiterhin umfasst das Messsystem 1 einen ersten Ultraschallwandler 58 und einen zweiten Ultraschallwandler 59. Der zweite Ultraschallwandler 59 ist in diesem Ausführungsbeispiel, ähnlich wie das Messrohr 3, auf die Grundplatte 62 gesteckt und mit dieser lösbar verbunden. Somit ist auch der zweite Ultraschallwandler 59 nur durch Ausstecken relativ zur Grundplatte 62 zu bewegen. Der erste Ultraschallwandler 58 hingegen, ist koaxial zur Messrohrachse verschiebbar auf der Grundplatte 62 gelagert. Er weist ein erstes, hier nicht verkörpertes, Führungselement auf, welches zusammen mit einem zweiten Führungselement 68 der Grundplatte 62 die Verschiebbarkeit des ersten Ultraschallwandlers 58 gewährleistet. Hier ist das zweite Führungselement 68 eine T-Nut. Eine am ersten Ultraschallwandler 58 befestigte und entsprechend ausgestaltete Schiene ermöglicht die formschlüssige Verbindung von erstem Ultraschallwandler 58 und Grundplatte 62 mit gleichzeitigem Freiheitsgrad des ersten Ultraschallwandlers 58 koaxial zur Messrohrachse. Der erste Ultraschallwandler 58 wird zur Montage an das Messrohr 3 heran geschoben und durch Umlegen des ersten Bügels 56 an das Messrohr 3 akustisch gekoppelt.

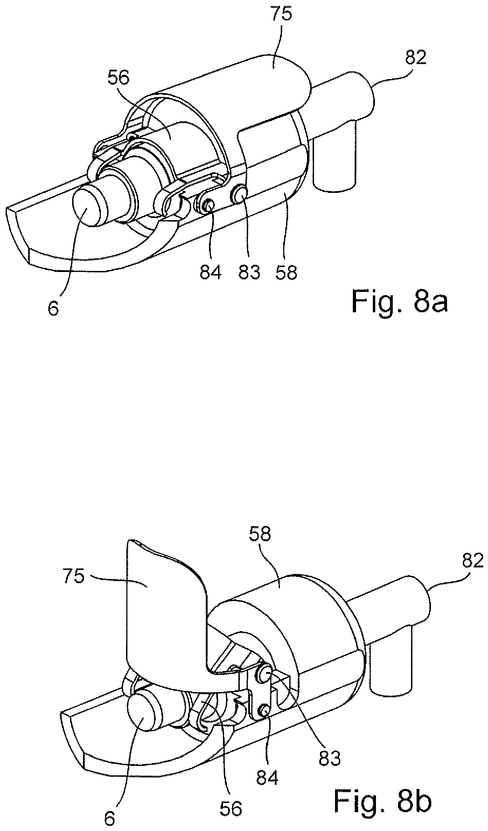

Sowohl der erste Ultraschallwandler 58 weist einen ersten Bügel 56 auf, als auch der zweite Ultraschallwandler 59 weist einen zweiten Bügel 57 auf. Die Bügel 56, 57 sind so ausgestaltet, dass sie in die am Messrohr 3 bzw. an den Ultraschallwandleraufnahmen 23, 24 angeordneten Zapfen 39, 40, 41 im umgelegten Zustand einhaken und somit die Ultraschallwandler 58 und 59 am Messrohr 3 lösbar befestigen. Eine mögliche Ausgestaltung der Mechanik der Befestigung wird in den Fig. 8a und 8b präsentiert. Durch Umlegen der Spannbügel 75 und 76 werden die Bügel 56, 57 umgelegt und die Ultraschallwandler 58 und 59 montiert bzw. wieder vom Messrohr gelöst. Fig. 5 zeigt die Ultraschallwandler 58 und 59 im montierten Zustand und damit die Bügel 56 und 57 in umgelegtem bzw. geschlossenem Zustand. Die Spannbügel 75 und 76 dienen hier gleichzeitig als Sicherungsbügel bzw. Verriegelungshebel.

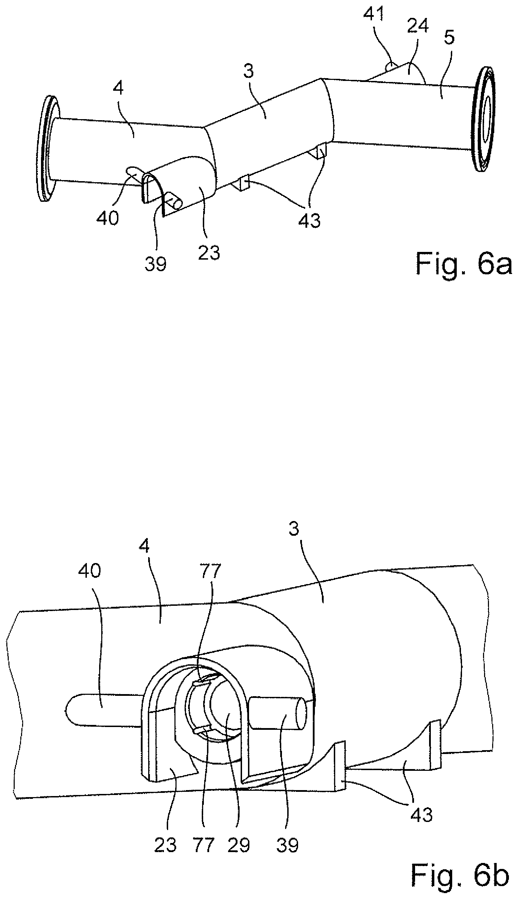

Die Fig. 6a und 6b beschreiben das Messrohr 3 mit einem Messrohreinlauf 4 und einem Messrohrauslauf 5, wie es in Fig. 5 noch auf der Grundplatte montiert dargestellt ist. Zu sehen sind die Ultraschallwandleraufnahmen 23 und 24, welche aus der Mitte des Messrohrs 3 heraus versetzt sind. Dadurch entsteht ein Messpfad, welcher auf der Seite der Messrohrachse verläuft, auf welcher sich der Messrohrauslauf 5 befindet. Weiterhin ist der Stecker 43 zum Andocken des Messrohrs 3 auf einer Grundplatte am Messrohr 3 vorgesehen und die Zapfen 39, 40, 41 zum Koppeln von Ultraschallwandlern. Die erste Ultraschallwandleraufnahme 23 ist topfförmig ausgestaltet. Eine erste Wandleraufnahmefläche 29 bildet den Topfboden der Ultraschallwandleraufnahme 23. An diese erste Wandleraufnahmefläche 29 ist das erste elektromechanische Wandlerelement 6 direkt oder indirekt über ein erstes Koppelelement des ersten Ultraschallwandlers akustisch koppelbar. Zur Führung des ersten Ultraschallwandlers weist die erste Ultraschallwandleraufnahme 23 Führungsschienen 77 auf. Diese dienen hier der zur Messrohrachse koaxialen Ausrichtung und Führung des ersten Ultraschallwandlers.

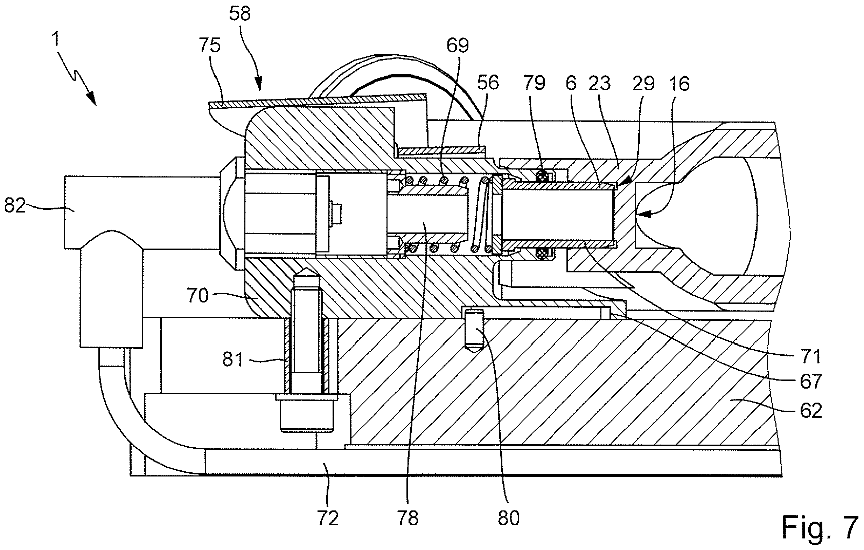

Fig. 7 zeigt einen Querschnitt durch ein erfindungsgemäßes Messsystem 1 mit einem erfindungsgemäßen Messrohr einem ersten Ultraschallwandler 58 und einer Grundplatte 62. Der erste Ultraschallwandler 58 weist ein erstes elektromechanisches Wandlerelement 6 auf, mittels welchem empfangene Ultraschallsignale in elektrische Signale umgewandelt werden oder welches elektrische Signale in Ultraschallsignale wandelt. Das erste elektromechanische Wandlerelement 6 ist an der Spitze einer so genannten Sensortasse 71 angeordnet. Die Sensortasse 71 wird in der ersten Ultraschallwandleraufnahme 23 geführt. Das erste elektromechanische Wandlerelement 6 steht in näherungsweise akustischer Spaltlosem Kontakt mit der ersten Wandleraufnahmefläche 29 der ersten Ultraschallwandleraufnahme 23. Die Mittelpunkte der ersten Wandleraufnahmefläche 29 der ersten Ultraschallwandleraufnahme 23 und des ersten elektromechanischen Wandlerelements 6 liegen auf einer Achse, welche Achse gleich der Verbindungslinie zwischen den Mittelpunkten der ersten Schallein- und/oder SChallauskoppelfläche 16 der ersten Ultraschallwandleraufnahme 23 und der zweiten Schallein- und/oder Schallauskoppelfläche der zweiten Ultraschallwandleraufnahme und damit gleich dem ersten Messpfad ist. Die erste Ultraschallwandleraufnahme 23 ist topfförmig dargestellt mit der ersten Wandleraufnahmefläche 29 als Topfboden.

Angepresst wird das erste elektromechanische Wandlerelement 6 bzw. die Sensortasse 71 über eine Spiralfeder 69. Die Federkraft der Spiralfeder 69 ist wiederum unter anderem abhängig von der Position des ersten Ultraschallwandlers 58 relativ zur ersten Wandleraufnahmefläche 29. Diese ist im montierten Zustand, also wenn die Bügel 56 umgelegt sind, durch Umlegen des ersten Spannbügels 75, und in die Zapfen am Messrohr eingegriffen haben, nur von Fertigungstoleranzen der einzelnen Bauteile beeinflusst. Einstellen lässt sich diese Federkraft mittels einer Einstellschraube 78. Die Einstellschraube 78 ist mit dem Gehäuse 70 des ersten Ultraschallwandlers 58 verbunden und die Spiralfeder 69 liegt einerseits an der Einstellschraube 78 an und andererseits an der Sensortasse 71. Durch die Einstellschraube 78 ist eine vorgegebene Kraft auf das erste elektromechanische Wandlerelement 6 bzw. auf die erste Wandleraufnahmefläche 29 einstellbar.

In der Achse parallel zum Messpfad wird der erste Ultraschallwandler 58 von dem Befestigungsmechanismus mit den Bügeln und den Zapfen festgestellt. Die anderen Freiheitsgrade werden mittels einem ersten und einem zweiten Führungselement, welche am ersten Ultraschallwandler 58 und der Grundplatte 62 angeordnet sind eingeschränkt. Eine Relativbewegung des ersten Ultraschallwandlers 58 zur Grundplatte 62 ist im montierten Zustand nur in dem Maße der Eindrückung der Feder 69 möglich. Die Aufgaben und Funktionen des ersten und zweiten Führungselements, also der so genannten Linearführung des Ultraschallwandlers 58 auf der Grundplatte 62, sind in dieser Ausgestaltung verteilt auf einen Zylinderstift 80, welcher fest in der Grundplatte 62 verankert ist, und einer Führungsbahn 67 im Ultraschallwandler. Zusätzlich ist eine Schraube in einer Distanzhülse 81 in eingeschränktem Maße zu einer Relativbewegung koaxial zum Messpfad fähig.

In den Fig. 8a und 8b ist eine Mechanik zur Befestigung der Ultraschallwandler am Messrohr illustriert. Der erste Ultraschallwandler 58 ist in Fig. 8a mit geschlossener Befestigungsmechanik, d.h. mit umgelegtem Bügel, und in Fig. 8b mit offenem Bügel zu sehen. Es sind das erste elektromechanische Wandlerelement 6 des Ultraschallwandlers 58 zu sehen, welches an die nicht gezeigte Wandleraufnahmefläche des Messrohrs im montierten Zustand angedrückt wird. Über den am anderen Ende des Ultraschallwandlers 58 angeordneten Winkelstecker 82 werden die Kabel unter die Grundplatte geführt.

Eine erste Achse 83 verbindet den ersten Bügel 56 und den ersten Spannbügel 75 in dargestellter Art und Weise. Über die zweite Achse 84 ist lediglich der Spannbügel 75 am Ultraschallwandler 58 befestigt. Dadurch ergibt sich beim Umlegen des Spannbügels 75 eine rotatorische und translatorische Bewegung des ersten Bügels 56. Dieser ist wiederum so ausgestaltet, dass er in die Zapfen des Messrohrs einhaken kann und somit den Ultraschallwandler am Messrohr feststellt

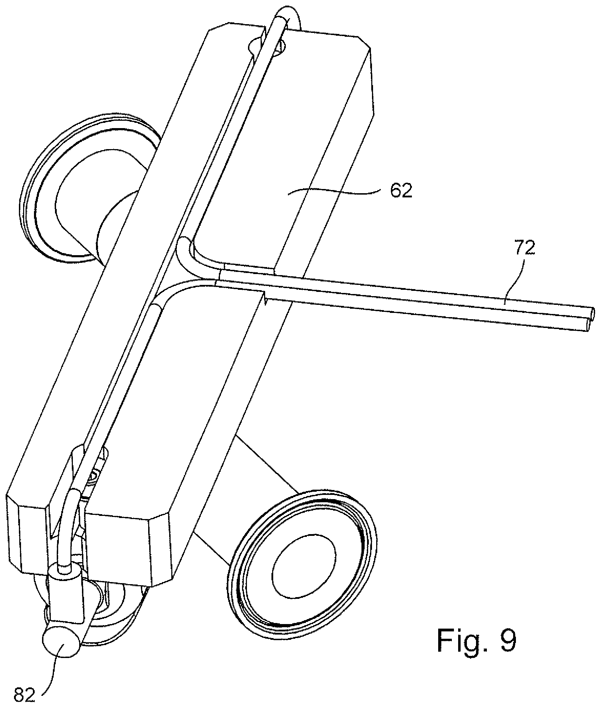

In Fig. 9 ist die vorher bereits beschriebene Grundplatte 62 in einer Draufsicht gezeichnet. Zu sehen ist ein Kabelkanal auf der Unterseite der Grundplatte 62, also auf der dem Messrohr abgewandten Seite der Grundplatte, in welchem die Kabel 72 der Ultraschallwandler in der Grundplatte 62 verdeckt und vor äußeren Einflüssen geschützt geführt werden. Die Kabel 72 werden über einen Winkelstecker 82 von den Ultraschallwandlern auf die Unterseite der Grundplatte 62 geführt.

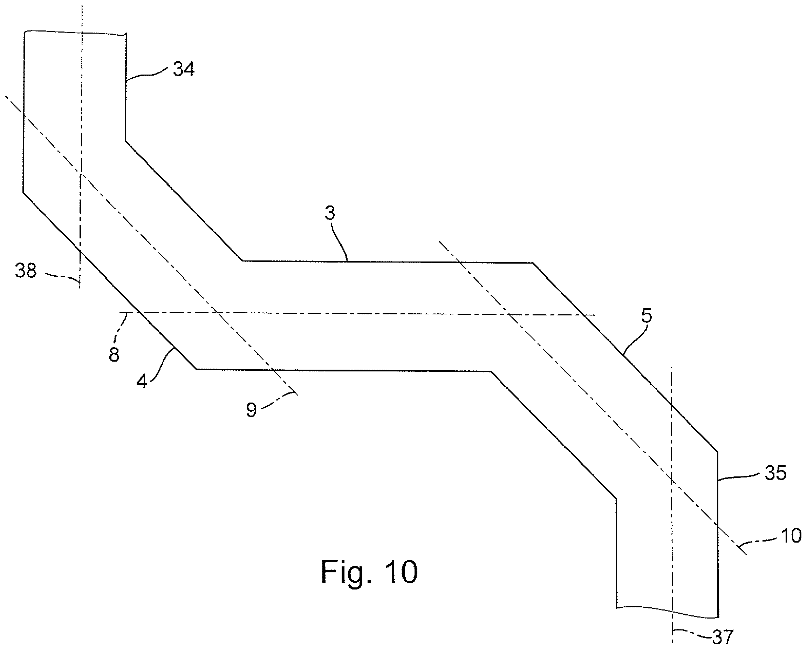

Fig. 10 repräsentiert eine Ausgestaltung eines weiteren erfindungsgemäßen Messrohrs 3. Das Messrohr 3 weist einen ersten Messrohreinlauf 4 und einen ersten Messrohrauslauf 5 auf, welche in einem Winkel von näherungsweise 45° zum Messrohr 3 am Messrohr 3 angeordnet sind, d.h. die erste Messrohreinlaufachse 9 und die erste Messrohrauslaufachse 10 weisen jeweils einen Winkel von ca. 45° zur Messrohrachse 8 auf. Erster Messrohreinlauf 4 und erster Messrohrauslauf 5 liegen dabei auf gegenüberliegenden Seiten des Messrohrs 3, d.h. die erste Messrohreinlaufachse 9 und die erste Messrohrauslaufachse 10 sind parallel zueinander und liegen im Wesentlichen in einer Raumebene.

Nun weist das Messrohr 3 eine zusätzliche Einlaufstrecke bzw. einen zusätzlichen, zweiten Messrohreinlauf 34 und eine zusätzliche Auslaufstrecke bzw. einen zusätzlichen, zweiten Messrohrauslauf 35 auf, welche ihrerseits jeweils eine Mittelachse 36, 37 aufweisen. Der zweite Messrohreinlauf 34 grenzt dabei an den ersten Messrohreinlauf 4 und der zweite Messrohrauslauf 35 grenzt an den ersten Messrohrauslauf 5. Die zweite Messrohreinlaufachse 36 weist in diesem Ausführungsbeispiel einen Winkel von im Wesentlichen 90° zur Messrohrachse auf und die zweite Messrohrauslaufachse 37 weist hier ebenfalls einen Winkel von im Wesentlichen 90° zur Messrohrachse auf. Auch die zweite Messrohreinlaufachse 36 und die zweite Messrohrauslaufachse 37 liegen in der gleichen Raumebene, wie die erste Messrohreinlaufachse 9 und die erste Messrohrauslaufachse 10 und die Messrohrachse 8. Dadurch wird die Strömung des Messmediums im Messrohr 3 in vorgegebener Art und Weise konditioniert.

### Bezugszeichenliste

- 1: Messsystem
- 2: Messmedium
- 3: Messrohr
- 4: Erster Messrohreinlauf
- 5: Erster Messrohrauslauf
- 6: Erstes elektromechanisches Wandlerelement
- 7: Zweites elektromechanisches Wandlerelement
- 8: Messrohrachse
- 9: Erste Messrohreinlaufachse
- 10: Erste Messrohrauslaufachse
- 11: Verbindungslinie zwischen den Mittelpunkten der Wandlerelemente
- 12: Mittelpunkt des ersten elektromechanischen Wandlerelements
- 13: Mittelpunkt des zweiten elektromechanischen Wandlerelements
- 14: Ringe
- 15: Innendurchmesser des Messrohrs
- 16: Erste Schallein- und/oder Schallauskoppelfläche
- 17: Zweite Schallein- und/oder Schallauskoppelfläche
- 18: Abstand zwischen den Schallein- und/oder Schallauskoppelflächen
- 19: Drittes elektromechanisches Wandlerelement
- 20: Viertes elektromechanisches Wandlerelement
- 21: Mittelpunkt des dritten elektromechanischen Wandlerelements
- 22: Mittelpunkt des vierten elektromechanischen Wandlerelements
- 23: Erste Ultraschallwandleraufnahme
- 24: Zweite Ultraschallwandleraufnahme
- 25: Regel-/Auswerteeinheit
- 26: Verbindungslinie zwischen den Mittelpunkten der ersten und zweiten Schallein- und/oder Schallauskoppelflächen
- 27: Mittelpunkt der ersten Schallein- und/oder Schallauskoppelfläche
- 28: Mittelpunkt der zweiten Schallein- und/oder Schallauskoppelfläche
- 29: Erste Wandleraufnahmefläche
- 30: Zweite Wandleraufnahmefläche
- 31: Mittelpunkt der ersten Wandleraufnahmefläche
- 32: Mittelpunkt der zweiten Wandleraufnahmefläche
- 33: Verbindungslinie zwischen den Mittelpunkten der Wandleraufnahmeflächen
- 34: Zweiter Messrohreinlauf
- 35: Zweiter Messrohrauslauf
- 36: Zweite Messrohreinlaufachse
- 37: Zweite Messrohrauslaufachse
- 38: Messrohraußenseite
- 39: Erster Zapfen
- 40: Zweiter Zapfen
- 41: Dritter Zapfen
- 42: Vierter Zapfen
- 43: Stecker
- 44: Kupplung
- 45: Dritte Ultraschallwandleraufnahme
- 46: Vierte Ultraschallwandleraufnahme
- 47: Dritte Schallein- und/oder Schallauskoppelfläche
- 48: Vierte Schallein- und/oder Schallauskoppelfläche
- 49: Mittelpunkt der dritten Schallein- und/oder Schallauskoppelfläche
- 50: Mittelpunkt der vierten Schallein- und/oder Schallauskoppelfläche
- 51: Verbindungslinie zwischen den Mittelpunkten der dritten und vierten Schallein- und/oder Schallauskoppelflächen
- 52: Dritte Wandleraufnahmefläche
- 53: Vierte Wandleraufnahmefläche
- 54: Erster Messpfad
- 55: Zweiter Messpfad
- 56: Erster Bügel
- 57: Zweiter Bügel
- 58: Erster Ultraschallwandler
- 59: Zweiter Ultraschallwandler
- 60: Dritter Ultraschallwandler
- 61: Vierter Ultraschallwandler
- 62: Grundplatte
- 63: Erstes Koppelelement
- 64: zweites Koppelelement
- 65: Drittes Koppelelement
- 66: Viertes Koppelelement
- 67: Erstes Führungselement
- 68: Zweites Führungselement
- 69: Feder
- 70: Ultraschallwandlergehäuse
- 71: Sensortasse
- 72: Kabel
- 73: Erstes Zwischenrohr
- 74: Zweites Zwischenrohr
- 75: Erster Spannbügel
- 76: Zweiter Spannbügel
- 77: Führungsschienen
- 78: Einstellschraube
- 79: O-Ring-Dichtung
- 80: Zylinderstift
- 81: Distanzhülse
- 82: Winkelstecker
- 83: Erste Verschlussachse
- 84: Zweite Verschlussachse

## Patentansprüche

1. Messrohr (3) für den Einsatz in einem Messsystem (1) zur Bestimmung und/oder Überwachung des Durchflusses eines Messmediums (2) durch das Messrohr (3), mit einer Messrohrachse (8) und mit einer ersten Ultraschallwandleraufnahme (23) zur Aufnahme zumindest eines ersten elektromechanischen Wandlerelements (6) und zumindest einer weiteren, zweiten Ultraschallwandleraufnahme (24) zur Aufnahme zumindest eines zweiten elektromechanischen Wandlerelements (7), und mit einem Messrohreinlauf (4) und einem Messrohrauslauf (5), welcher Messrohreinlauf (4) eine Messrohreinlaufachse (9) aufweist, welche Messrohreinlaufachse (9) einen Winkel α ungleich 90° zur Messrohrachse (8) aufweist und welcher Messrohrauslauf (5) eine Messrohrauslaufachse (10) aufweist, welche Messrohrauslaufachse (10) einen Winkel β ungleich 90° zur Messrohrachse (8) aufweist, wobei die erste Ultraschallwandleraufnahme (23) ein erstes Koppelement zwischen erstem elektromechanischen Wandlerelement (6) und dem Messmedium (2) ist und eine, einen Mittelpunkt (27) aufweisende, erste Schallein- und/oder Schallauskoppelfläche (16) aufweist, wobei die zweite Ultraschallwandleraufnahme (24) ein zweites Koppelement zwischen zweitem elektromechanischen Wandlerelement (7) und Messmedium (2) ist und eine, einen Mittelpunkt (27) aufweisende, zweite Schallein- und/oder Schallauskoppelfläche (17) aufweist,
wobei die erste Schallein- und/oder Schallauskoppelfläche und die zweite Schallein- und/oder Schallauskoppelfläche sich im Wesentlichen planparallel gegenüberstehen,
**dadurch gekennzeichnet,**
**dass** die Ultraschallwandleraufnahmen (23, 24) so ausgestaltet sind,
**dass** eine Verbindungslinie (26) zwischen den Mittelpunkten (27, 28) der ersten und zweiten Schallein- und/oder Schallauskoppelfläche (16, 17) in einem Winkel η zur Messrohrachse (8) steht und auf der Seite der Messrohrachse (8) verläuft, auf welcher sich der Messrohrauslauf (5) befindet.

2. Messrohr (3) nach Anspruch 1,
**dadurch gekennzeichnet,**
**dass** die Ultraschaliwandleraufnahmen (23, 24) jeweils mindestens eine Wandleraufnahmefläche (29, 30) aufweisen, welche mit den Ultraschallwandlern (6, 7) akustisch koppelbar sind, welche Wandleraufnahmeflächen (29,30) sich im Wesentlichen planparallel gegenüberstehen und jeweils einen Mittelpunkt (31, 32) aufweisen, wobei eine Verbindungslinie (33) zwischen den Mittelpunkten (31, 32) der ersten und zweiten Wandleraufnahmefläche (29, 30) in einem Winkel θ zur Messrohrachse (8) steht und auf der Seite der Messrohrachse (8) verläuft, auf welcher sich der Messrohrauslauf (5) befindet.

3. Messrohr (3) nach einem der Ansprüche 1 bis 2, **dadurch gekennzeichnet,**
**dass** das Messrohr zwei elektromechanische Wandlerelemente (6,7) aufweist, welche mit jeweils einer Wandleraufnahmefläche (29, 30) akustisch gekoppelt sind, wobei die gekoppelten elektromechanischen Wandlerelemente (6, 7) jeweils einen Mittelpunkt (12, 13) aufweisen und eine Verbindungslinie (11) zwischen den Mittelpunkten (12, 13) des ersten und zweiten elektromechanischen Wandlerelements (6, 7) in einem Winkel γ zur Messrohrachse (8) steht und auf der Seite der Messrohrachse (8) verläuft, auf welcher sich der Messrohrauslauf (5) befindet und dass ein erster Messpfad (54) zwischen den beiden elektromechanischen Wandlerelementen in einem Winkel ζ zur Messrohrachse (8) steht und auf der Seite der Messrohrachse (8) verläuft, auf welcher sich der Messrohrauslauf (5) befindet.

4. Messrohr (3) nach Anspruch 3, **dadurch gekennzeichnet,dass** ζ gleich γ ist und/oder dass ζ gleich η ist und/oder dass ζ gleich θ ist und/oder dass η gleich γ ist und/oder dass η gleich θ und/oder dass θ gleich γ ist.

5. Messrohr (3) nach einem der Ansprüche 1 bis 4, **dadurch gekennzeichnet,**
**dass** der Messrohreinlauf (4) und der Messrohrauslauf (5) auf sich gegenüberliegenden Seiten des Messrohrs (3) angeordnet sind.

6. Messrohr (3) nach einem der Ansprüche 1 bis 5, **dadurch gekennzeichnet,**
**dass** der Winkel α näherungsweise 45° beträgt.

7. Messrohr (3) nach einem der Ansprüche 1 bis 6, **dadurch gekennzeichnet,**
**dass** die Messrohrachse (8), die Messrohreinlaufachse (9) und die Messrohrauslaufachse (10) im Wesentlichen in einer Raumebene liegen.

8. Messrohr (3) nach einem der Ansprüche 1 bis 7, **dadurch gekennzeichnet,**
**dass** das Messrohr (3) eine zusätzliche Einlaufstrecke (34) und eine zusätzliche Auslaufstrecke (35) aufweist, welche zusätzliche Einlaufstrecke (34) am Messrohreinlauf (4) angeordnet ist und welche zusätzliche Auslaufstrecke (35) am Messrohrauslauf (5) angeordnet ist, wobei die zusätzliche Einlaufstrecke (34) eine zweite Messrohreinlaufachse (36) aufweist und die zusätzliche Auslaufstrecke (35) eine zweite Messrohrauslaufachse (37) aufweist, wobei die zweite Messrohreinlaufachse (36) einen Winkel von im Wesentlichen 90° zur Messrohrachse aufweist und wobei die zweite Messrohrauslaufachse (37) einen Winkel von im Wesentlichen 90° zur Messrohrachse aufweist.

9. Messrohr (3) nach einem der Ansprüche 1 bis 8, **dadurch gekennzeichnet,**
**dass** die Fläche der ersten Schallein- und/oder Schallauskoppelfläche (16) ungleich der Fläche der ersten Wandleraufnahmefläche (29) und/oder dass die Fläche der zweiten Schallein- und/oder Schallauskoppelfläche (17) ungleich der Fläche der zweiten Wandleraufnahmefläche (30) ist.

10. Messrohr (3) nach einem der Ansprüche 3 bis 4, **dadurch gekennzeichnet,**
**dass** das Messrohr (3) eine dritte Ultraschallwandleraufnahme (45) zur Aufnahme zumindest eines dritten elektromechanischen Wandlerelements (19) und vierte Ultraschallwandleraufnahme (46) zur Aufnahme zumindest eines vierten elektromechanischen Wandlerelements (20) aufweist, wobei die dritte Ultraschallwandleraufnahme (45) ein drittes Koppelement zwischen drittem elektromechanischen Wandlerelement (19) und dem Messmedium (2) ist und eine dritte Schallein- und/oder Schallauskoppelfläche (47) aufweist, wobei die vierte Ultraschallwandleraufnahme (46) ein viertes Koppelement zwischen viertem elektromechanischen Wandlerelement (20) und Messmedium (2) ist und eine vierte Schallein- und/oder Schallauskoppelfläche (48) aufweist, wobei die dritte und vierte Ultraschallwandleraufnahme (45, 46) so ausgestaltet sind, dass ein zweiter Messpfad (55) zwischen dem dritten und dem vierten elektromechanischen Wandlerelement (19, 20) in einem Winkel ξ zur Messrohrachse (8) steht und auf der Seite der Messrohrachse (8) verläuft, welche dem ersten Messpfad (54) gegenüberliegt.

11. Messrohr (3) nach einem der Ansprüche 1 bis 10, **dadurch gekennzeichnet,**
**dass** der Winkel ξ näherungsweise gleich groß wie der Winkel ζ ist.

12. Messrohr (3) nach einem der Ansprüche 1 bis 11, **dadurch gekennzeichnet,**
**dass** zumindest eine Ultraschallwandleraufnahme (23, 24, 45, 46) topfförmig ausgestaltet ist, mit der Wandleraufnahmefläche (29, 30, 52, 53) der Ultraschallwandleraufnahme (23, 24, 45, 46) als Topfboden.

13. Messrohr (3) nach einem der Ansprüche 1 bis 12, **dadurch gekennzeichnet,**
**dass** das Messrohr (3) querschnittsverengende Ringe (14) aufweist.

## Claims

1. Measuring tube (3) for use in a measuring system (1) designed to determine and/or monitor the flow of a medium (2) through the measuring tube (3), with a measuring tube axis (8) and with a first ultrasonic transducer support (23) designed to hold at least a first electromechanical transducer element (6), and at least an additional, second ultrasonic transducer support (24) designed to hold at least a second electromechanical transducer element (7), and with a measuring tube inlet (4) and a measuring tube outlet (5), wherein said measuring tube inlet (4) has a measuring tube inlet axis (9), said measuring tube inlet axis (9) having an angle σ unequal to 90° in relation to the measuring tube axis (8), and wherein said measuring tube outlet (5) has a measuring tube outlet axis (10), said measuring tube outlet axis (10) having an angle β unequal to 90° in relation to the measuring tube axis (8), wherein the first ultrasonic transducer support (23) is a first coupling element between the first electromechanical transducer element (6) and the medium (2), and has a first acoustic coupling and/or decoupling surface (16) with a center point (27), wherein the second ultrasonic transducer support (24) is a second coupling element between the second electromechanical transducer element (7) and the medium (2), and has a second acoustic coupling and/or decoupling surface (17) with a center point (**28**), wherein the first acoustic coupling and/or decoupling surface and the second acoustic coupling and/or decoupling surface are essentially opposite one another in a plane parallel manner,
**characterized in that**
the ultrasonic transducer supports (23, 24) are designed in such a way that a connecting line (26) between the centers (27, 28) of the first and the second acoustic coupling and/or decoupling surface (16, 17) is at an angle η in relation to the measuring tube axis (8) and extends on the side of the measuring tube axis (8) on which the measuring tube outlet (5) is located.

2. Measuring tube (3) as claimed in Claim 1,
**characterized in that**
the ultrasonic transducer supports (23, 24) each have at least one transducer support surface (29, 30) which can be acoustically coupled with the ultrasonic transducers (6, 7), said transducer support surfaces (29, 30) being essentially opposite one another in a plane parallel manner and each having a center point (31, 32), wherein a connecting line (33) between the center points (31, 32) of the first and the second transducer support surface (29, 30) is at an angle θ in relation to the measuring tube axis (8) and extends on the side of the measuring tube axis (8) on which the measuring tube outlet (5) is located.

3. Measuring tube (3) as claimed in one of the Claims 1 to 2,
**characterized in that**
the measuring tube has two electromechanical transducer elements (6, 7), each being acoustically coupled with a transducer support surface (29, 30), wherein the coupled electromechanical transducer elements (6, 7) each has a center point (12, 13), and wherein a connecting line (11) between the center points (12, 13) of the first and second electromechanical transducer element (6, 7) is located at an angle γ in relation to the measuring tube axis (8) and extends on the side of the measuring tube axis (8) on which the measuring tube outlet (5) is located, and **in that** a first measuring path (54) is located between the two electromechanical transducer elements at an angle ζ in relation to the measuring tube axis (8) and extends on the side of the measuring tube axis (8) on which the measuring tube outlet (5) is located.

4. Measuring tube (3) as claimed in Claim 3,
**characterized in that**
ζ is equal to γ and/or **in that** ζ is equal to η and/or **in that** ζ is equal to θ and/or **in that** η is equal to γ and/or **in that** η is equal to θ and/or **in that** θ is equal to γ.

5. Measuring tube (3) as claimed in one of the Claims 1 to 4,
**characterized in that**
the measuring tube inlet (4) and the measuring tube outlet (5) are arranged on opposite sides of the measuring tube (3).

6. Measuring tube (3) as claimed in one of the Claims 1 to 5,
**characterized in that**
the angle σ is approximately equal to 45°.

7. Measuring tube (3) as claimed in one of the Claims 1 to 6,
**characterized in that**
the measuring tube axis (8), the measuring tube inlet axis (9) and the measuring tube outlet axis (10) are essentially situated on the same spatial plane.

8. Measuring tube (3) as claimed in one of the Claims 1 to 7,
**characterized in that**
the measuring tube (3) has an additional inlet section (34) and an additional outlet section (35), wherein said additional inlet section (34) is arranged at the measuring tube inlet (4) and wherein said additional outlet section (35) is arranged at the measuring tube outlet (5), wherein the additional inlet section (34) has a second measuring tube inlet axis (36) and the additional outlet section (35) has a second measuring tube outlet axis (37), wherein the second measuring tube inlet axis (36) has an angle of essentially 90° in relation to the measuring tube axis and wherein the second measuring tube outlet axis (37) has an angle of essentially 90° in relation to the measuring tube axis.

9. Measuring tube (3) as claimed in one of the Claims 1 to 8,
**characterized in that**
the surface of the first acoustic coupling and/or decoupling surface (16) is unequal to the surface of the first transducer support surface (29) and/or **in that** the surface of the second acoustic coupling and/or decoupling (17) is unequal to the surface of the second transducer support surface (30).

10. Measuring tube (3) as claimed in one of the Claims 3 to 4,
**characterized in that**
the measuring tube (3) has a third ultrasonic transducer support (45) to hold at least a third electromechanical transducer element (19) and a fourth ultrasonic transducer support (46) to hold at least a fourth electromechanical transducer element (20), wherein the third ultrasonic transducer support (45) is a third coupling element between the third electromechanical transducer element (19) and the medium (2) and has a third acoustic coupling and/or decoupling surface (47), wherein the fourth ultrasonic transducer support (46) is a fourth coupling element between the fourth electromechanical transducer element (20) and the medium (2) and has a fourth acoustic coupling and/or decoupling surface (48), the third and the fourth ultrasonic transducer support (45, 46) being designed in such a way that a second measuring path (55) between the third and the fourth electromechanical transducer element (19, 20) is at an angle ξ in relation to the measuring tube axis (8) and extends on the side of the measuring tube axis (8) situated opposite the first measuring path (54).

11. Measuring tube (3) as claimed in one of the Claims 1 to 10,
**characterized in that**
the angle ξ is approximately equal to the angle ζ.

12. Measuring tube (3) as claimed in one of the Claims 1 to 11,
**characterized in that**
at least one ultrasonic transducer support (23, 24, 45, 46) is designed in the shape of a pot, with the transducer support surface (29, 30, 52, 53) of the ultrasonic transducer support (23, 24, 45, 46) acting as the base of the pot.

13. Measuring tube (3) as claimed in one of the Claims 1 to 12,
**characterized in that**
the measuring tube (3) has rings (14) that reduce the cross-section.

## Revendications

1. Tube de mesure (3) pour une utilisation dans un système de mesure (1) destiné à la détermination et/ou la surveillance du débit d'un produit mesuré (2) à travers le tube de mesure (3), avec un axe de tube de mesure (8) et avec un premier support de convertisseur à ultrasons (23) destiné à supporter au moins un premier élément convertisseur électromécanique (6), et au moins un deuxième support de convertisseur à ultrasons (24) destiné à supporter au moins un deuxième élément convertisseur électromécanique (7), et avec une entrée de tube de mesure (4) et une sortie de tube de mesure (5), laquelle entrée de tube de mesure présente un axe d'entrée de tube de mesure (9), lequel axe d'entrée de tube de mesure (9) présente un angle σ différent de 90° par rapport à l'axe de tube de mesure (8), le premier support de convertisseur à ultrasons (23) comportant un premier élément de couplage entre le premier élément convertisseur électromécanique (6) et le produit mesuré (2), et une première surface de couplage et/ou de découplage acoustique (16) présentant un centre (27), le deuxième support de convertisseur à ultrasons (24) comportant un deuxième élément de couplage ente le deuxième élément convertisseur électromécanique (7) et le produit mesuré (2), et une deuxième surface de couplage et/ou de découplage acoustique (17) présentant un centre (28), la première surface de couplage et/ou de découplage acoustique et la deuxième surface de couplage et/ou de découplage acoustique se trouvant pour l'essentiel dans des plans parallèles,
**caractérisé**
**en ce que** les supports de convertisseur à ultrasons (23, 24) sont conçus de telle sorte qu'une ligne de liaison (26) se trouve entre les centres (27, 28) de la première et de la deuxième surface de couplage et/ou de découplage acoustique (16, 17) dans un angle η par rapport à l'axe de tube de mesure (8) et s'étend sur le côté de l'axe de tube de mesure (8), sur lequel se trouve la sortie de tube de mesure (5).

2. Tube de mesure (3) selon la revendication 1,
**caractérisé**
**en ce que** les supports de convertisseur à ultrasons (23, 24) présentent chacun au moins une surface de support de convertisseur (29, 30), lesquelles peuvent être couplées de façon acoustique avec les convertisseurs à ultrasons (6, 7), lesquelles surfaces de support de convertisseur (29, 30) se trouvent pour l'essentiel dans des plans parallèles et présentent chacune un centre (31, 32), une ligne de liaison (33) se trouvant entre les centres (31, 32) de la première et de la deuxième surface de support de convertisseur (29, 30) dans un angle θ par rapport à l'axe de tube de mesure (8) et s'étend sur le côté de l'axe de tube de mesure (8), sur lequel se trouve la sortie de tube de mesure (5).

3. Tube de mesure (3) selon l'une des revendications 1 à 2,
**caractérisé**
**en ce que** le tube de mesure comporte deux éléments convertisseurs électromécaniques (6, 7), lesquels sont respectivement couplés de manière acoustique avec une surface de support de convertisseur (29, 30), les éléments convertisseurs électromécaniques (6, 7) couplés présentant chacun un centre (12, 13) et une ligne de liaison (11) entre les centres (12, 13) du premier et du deuxième élément convertisseur électromécanique (6, 7) faisant un angle γ par rapport à l'axe de tube de mesure (8) et s'étendant sur le côté de l'axe de tube de mesure (8), sur lequel se trouve la sortie de tube de mesure (5),
et **en ce qu'**un premier canal ultrasonique de mesure (54) se trouve entre les deux éléments convertisseurs mécaniques dans un angle ζ par rapport à l'axe de tube de mesure (8) et s'étend sur le côté de l'axe de tube de mesure (8), sur lequel se trouve la sortie de tube de mesure (5).

4. Tube de mesure (3) selon la revendication 3,
**caractérisé**
**en ce que** ζ est égal γ et/ou en ce que ζ est égal à η et/ou en ce que ζ est égal à θ et/ou en ce que η est égal à γ et/ou en ce que η est égal à θ et/ou en ce que θ est égal à γ.

5. Tube de mesure (3) selon l'une des revendications 1 à 4,
**caractérisé**
**en ce que** l'entrée de tube de mesure (4) et la sortie de tube de mesure (5) sont disposées sur des côtés opposés du tube de mesure (3).

6. Tube de mesure (3) selon l'une des revendications 1 à 5,
**caractérisé**
**en ce que** l'angle σ est approximativement égal à 45°.

7. Tube de mesure (3) selon l'une des revendications 1 à 6,
**caractérisé**
**en ce que** l'axe de tube de mesure (8), l'axe d'entrée de tube de mesure (9) et l'axe de sortie de tube de mesure (10) sont situés pour l'essentiel dans un même plan spatial.

8. Tube de mesure (3) selon l'une des revendications 1 à 7,
**caractérisé**
**en ce que** le tube de mesure (3) présente une section d'entrée (34) supplémentaire et une section de sortie (35) supplémentaire, laquelle section d'entrée (34) supplémentaire est disposée à l'entrée de tube de mesure (4) et laquelle section de sortie (35) supplémentaire est disposée à la sortie de tube de mesure (5), la section d'entrée (34) supplémentaire présentant un deuxième axe d'entrée de tube de mesure (36) et la section de sortie (35) supplémentaire présentant un deuxième axe de sortie de tube de mesure (37), le deuxième axe d'entrée de tube de mesure (36) présentant un angle pour l'essentiel de 90° par rapport à l'axe de tube de mesure et le deuxième axe de sortie de tube de mesure (37) présentant un angle pour l'essentiel de 90° par rapport à l'axe de tube de mesure.

9. Tube de mesure (3) selon l'une des revendications 1 à 8,
**caractérisé**
**en ce que** la superficie de la première surface de couplage et/ou de découplage acoustique (16) est différente de la superficie de la première surface de support de convertisseur (29) et/ou en ce que la deuxième surface de couplage et/ou de découplage acoustique (17) est différente de la superficie de la deuxième surface de support de convertisseur (30).

10. Tube de mesure (3) selon l'une des revendications 3 à 4,
**caractérisé**
**en ce que** le tube de mesure (3) comporte un troisième support de convertisseur à ultrasons (45) servant à supporter un troisième élément convertisseur électromécanique (19) et un quatrième support de convertisseur à ultrasons (46) servant à supporter un quatrième élément convertisseur électromécanique (20), le troisième support de convertisseur à ultrasons (45) constituant un troisième élément de couplage entre le troisième élément de convertisseur électromécanique (19) et le produit mesuré (2) et présentant une troisième surface de couplage acoustique et/ou de découplage acoustique (47), le quatrième support de convertisseur à ultrasons (46) constituant un quatrième élément de couplage entre le quatrième élément convertisseur électromécanique (20) et le produit mesuré (2) et présentant une quatrième surface de couplage acoustique et/ou de découplage acoustique (48), le troisième et le quatrième support de convertisseur à ultrasons (45, 46) étant conçus de telle sorte à ce qu'il existe un canal ultrasonique de mesure (55) entre le troisième et le quatrième élément convertisseur électromécanique (19, 20) selon un angle ξ par rapport à l'axe de tube de mesure (8) et qui s'étend sur le côté de l'axe de tube de mesure (8) situé à l'opposé du premier canal ultrasonique de mesure (54).

11. Tube de mesure (3) selon l'une des revendications 1 à 10,
**caractérisé**
**en ce que** l'angle ξ est approximativement égal à l'angle ζ.

12. Tube de mesure (3) selon l'une des revendications 1 à 11,
**caractérisé**
**en ce qu'**au moins un support de convertisseur à ultrasons (23, 24, 45, 46) est conçu en forme de pot, avec la surface de support de convertisseur à ultrasons (29, 30, 52, 53) du support de convertisseur à ultrasons (23, 24, 45, 46) comme fond de pot.

13. Tube de mesure (3) selon l'une des revendications 1 à 12,
**caractérisé**
**en ce que** le tube de mesure (3) comporte des anneaux (14) réduisant la section.
